(19) Europäisches Patentamt
European Patent Office
Office européen des brevets

(11) EP 0 495 459 B1

(12) EUROPÄISCHE PATENTSCHRIFT

(45) Veröffentlichungstag und Bekanntmachung des Hinweises auf die Patenterteilung:
**10.09.1997 Patentblatt 1997/37**

(51) Int. Cl.$^6$: **C03B 8/02**, C01B 33/14, H01B 3/08

(21) Anmeldenummer: **92100519.5**

(22) Anmeldetag: **14.01.1992**

# (54) Verwendung von Komposit-Materialien, die Metallpartikel in einer isolierenden Oxidmatrix enthalten, als Dielektrika

Use of composite materials which contain metal particles in an isolating oxide matrix as dielectrics

Utilisation de matériaux composites contenant des particules de métal dans une matrice d'oxides isolante comme diélectriques

(84) Benannte Vertragsstaaten:
**DE FR GB IT**

(30) Priorität: **15.01.1991 DE 4100990**

(43) Veröffentlichungstag der Anmeldung:
**22.07.1992 Patentblatt 1992/30**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
- **Schubert, Ulrich, Prof. Dr.
W-8700 Würzburg (DE)**
- **Breitscheidel, Boris, Dr.
W-6400 Fulda (DE)**
- **Enders, Achim, Dr.
W-5000 Köln 80 (DE)**
- **Marquardt, Peter, Dr.
W-5000 Köln 41 (DE)**
- **Nimtz, Günter, Prof. Dr.
W-5020 Königsdorf (DE)**

(56) Entgegenhaltungen:

| | |
|---|---|
| **GB-A- 1 358 557** | **US-A- 3 759 683** |
| **US-A- 4 668 299** | **US-H- 626** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 495 459 B1

Printed by Rank Xerox (UK) Business Services
2.14.14/3.4

## Beschreibung

Die Erfindung betrifft die Verwendung von Komposit-Materialien, die kleine Metallpartikel in einer isolierenden Oxidmatrix enthalten, als Dielektrika. Ferner betrifft die Erfindung elektrische Apparate und Bauelemente, die solche Komposit-Materialien als Dielektrika aufweisen oder daraus bestehen.

Für viele Anwendungen, z. B. auf dem Gebiet der elektrischen Apparate und Bauelemente, sind Komposit-Materialien wünschenswert, die kleine Metallpartikel in Oxidmatrices (Keramikmatrices und Keramik-verwandte Matrices) enthalten Dies wird oftmals durch Imprägnieren von keramischen und Keramik-verwandten Körpern mit Metallsalzen und deren anschließende Reduktion zum Metall erreicht. Damit sind aber Metallpartikel-Größen im unteren Nanometer-Bereich nicht immer erreichbar. Außerdem wird die Metallkomponente nur auf der äußeren Oberfläche des keramischen Materials aufgebracht, nicht in den Poren, und die Metallbeladung des Trägers ist begrenzt. Schließlich ist ein wesentlicher Nachteil herkömmlicher Komposit-Materialien darin zu sehen, daß die in der Oxidmatrix fixierten Metallpartikel eine relativ breite und unregelmäßige Teilchengrößenverteilung aufweisen.

Der Sol-Gel-Prozeß bietet prinzipiell einen Lösungsweg für die Herstellung von Komposit-Materialien mit einer hohen Dispersion der eingelagerten Komponente, da die Ausgangsverbindungen auf molekularem Niveau miteinander vermischt werden können. Von mehreren Forschungsgruppen wurde versucht, Komposit-Materialien der genannten Art über den Sol-Gel-Prozeß in der Weise herzustellen, daß Kieselsäureester oder Aluminiumnitrat in Gegenwart von Metallsalzen polykondensiert wurden. Durch anschließendes Reduzieren der Gele wurden Metallpartikel erzeugt, deren Durchmesser in den meisten Fällen aber nicht im unteren Nanometer-Bereich liegen. Diese Methode ist z.B. in folgenden Publikationen beschrieben: R.A. Roy, R. Roy, Mat. Res. Bull. 19 (1984), 169; R. Roy, S. Komarneni, D.M. Roy, Mat. Res. Soc. Symp. Proc. 21 (1984), 347; G.N. Subbanna, C.N.R. Rao, Mat. Res. Bull. 21 (1986), 1465; F. Orgaz, H. Rawson, J. Non-Cryst. Solids 82 (1986), 378. Der wichtigste Nachteil dieser Methode ist, daß Metallpartikel-Größe und -Verteilung kaum kontrollierbar sind und nur in wenigen Fällen den gewünschten Anforderungen (homogene Dispersion, sehr kleine Teilchen-Durchmesser, enge Teilchengrößen-Verteilung) entsprechen.

Ueno et al. (A. Ueno, H. Suzuki, Y. Kotera, J. Chem. Soc. Faraday Trans I 79 (1983), 127; K. Tohij, Y. Udagawa, S. Tanabe, A. Ueno, J. Am. Chem. Soc. 106 (1984), 612; H. Tanagawa, K. Oyama, T. Yamaguchi, H. Tanaka, H. Tsuiki, A. Ueno, J. Chem. Soc. Faraday Trans I 83 (1987), 3189; S. Tanabe, T. Ida, M. Suginage, A. Ueno, Y. Kotera, K. Tohij, Y. Udagawa, Chem. Letters (1984), 1567; T. Akiyama, E. Tanigawa, T. Ida, H. Tsuiki, A. Ueno, Chem. Letters (1986), 723; T. Seiji, F. Koga, S. Tanabe, A. Ueno, Y. Kotera, Nippon Kagaku Kaishi (1984), 998) berichteten, daß aus Lösungen von Metall-glykolaten und Tetraethoxysilan über den Sol-Gel-Prozeß nach entsprechender Nachbehandlung der Gele Komposit-Materialien mit kleinen und homogen verteilten Metallpartikeln in $SiO_2$ erhältlich sind. Die Metallglykolate werden in situ aus den entsprechenden Metallnitraten in Ethylenglykol erzeugt. Durch EXAFS-Spektroskopie wurde festgestellt, daß nach Zugabe von Tetraethoxysilan zu der Lösung des Metallglykolats Glykolatreste teilweise durch $OSi(OEt)_3$-Reste ersetzt werden. Über die Alkoxysiloxyl-Reste erfolgt während der Polykondensation die Anbindung des Metallions an die sich ausbildende Silicatmatrix. Durch Trocknen der Gele und anschließende Reduktion werden kleine Metallpartikel gebildet. Die Einschränkung dieser Methode besteht darin, daß Komposit-Materialien nur mit solchen Metallen herstellbar sind, die Glykolate bilden, die also oxophil sind.

In jüngerer Zeit führten Experimente an Metallkristallen im Sub-Mikrometerbereich zur Entdeckung des Größen-induzierten Metall-Isolator-Übergangs (SIMIT = size-induced metal insulator transition); siehe z. B. G. Nimtz, P. Marquardt, H. Gleiter, J. Crystal Growth 86 (1988), 66; P. Marquardt, G. Nimtz, Festkörperprobleme, Advances in Solid State Physics, Vol. 29, (Vieweg, Braunschweig 1989), 317; und andere Publikationen von G. Nimtz et al. Dabei hat sich gezeigt, daß die elektrische Leitfähigkeit proportional zum Volumen der Partikel abnimmt. Der SIMIT-Effekt kann z. B. zur Herstellung maßgeschneiderter Dielektrika und verlustarmer Ferromagnetika benutzt werden.

Aufgabe der Erfindung ist es, ein Verfahren zur Herstellung von Komposit-Materialien bereitzustellen, die Metallpartikel mit kleinem Teilchen-Durchmesser und sehr enger Teilchengrößen-Verteilung in gleichmäßiger, homogener Dispersion in einer isolierenden Oxidmatrix enthalten, den SIMIT-Effekt zeigen und als Dielektrika verwendbar sind.

Gegenstand der Erfindung ist ein Verfahren zur Herstellung von dielektrischen Komposit-Materialien, die Metallpartikel mit einer mittleren Teilchengröße von 0,2 bis 500 nm homogen dispergiert in einer isolierenden Matrix auf Basis von anorganischen Oxiden enthalten, nach dem Sol-Gel-Verfahren, das dadurch gekennzeichnet ist, daß man

a) in einem flüssigen Reaktionsmedium (1) eine oder mehrere Metallverbindungen und (2) eine oder mehrere bifunktionelle Verbindungen, die mindestens eine zur Komplexierung des Metalls befähigte Gruppe und mindestens eine bei der Polykondensation ein anorganisches Netzwerk bildende Gruppe aufweisen, und gegebenenfalls (3) einen oder mehrere zur Polykondensation befähigte Netzwerkbildner, wobei die Verbindungen (1), (2) und (3) im Reaktionsmedium löslich sind, den Bedingungen einer Komplexbildungsreaktion und hydrolytischen Polykondensation nach dem Sol-Gel-Prozeß unterwirft und

b) das erhaltene Polykondensat zur Bildung eines Komposit-Materials, das kleine Metall- und/oder Metalloxid-Partikel in einer Oxidmatrix enthält, oxidiert und

c) die gegebenenfalls vorhandenen Metalloxid-Partikel zum Metall reduziert.

Die Erfindung betrifft ferner die Verwendung der so hergestellten Komposit-Materialien als Dielektrika für elektrische Apparate und Bauelemente.

## Definitionen

Im folgenden bedeuten Alkylreste geradkettige,verzweigte oder cyclische Reste mit 1 bis 20, vorzugsweise 1 bis 10, Kohlenstoffatomen und insbesondere niedere Alkylreste; niedere Alkylreste weisen 1 bis 6, vorzugsweise 1 bis 4 Kohlenstoffatome auf.

Beispiele für Alkyl sind Dodecyl, Octadecyl und niedere Alkylreste wie Methyl, Ethyl, n-Propyl, Isopropyl, n-Butyl, Isobutyl, sek-Butyl, t-Butyl n-Pentyl, N-Hexyl, Cyclopentyl und Cyclohexyl.

Die Alkoxy-, Alkoxyalkoxy, Acyloxy-, Alkylamino-, Dialkylamino-, Alkyloxycarbonyl- und Alkylcarbonylreste leiten sich von den vorstehend genannten Alkylresten ab. Spezielle Beispiele sind: Methoxy, Ethoxy, n- und i-Propoxy-, n-, sek- und t-Butoxy, Isobutoxy, β-Methoxyethoxy, Acetyloxy, Propionyloxy, Monomethylamino, Monoethylamino, Dimethylamino, Diethylamino, Methylcarbonyl, Ethylcarbonyl, Methoxycarbonyl und Ethoxycarbonyl.

Die Aryl- und Arylenreste enthalten vorzugsweise 6 bis 14 Kohlenstoffatome, wie Phenyl, Naphthyl, Phenylen und Naphthylen.

Halogen bedeutet Fluor, Chlor, Brom und Iod.

## Metallverbindungen

Als Ausgangsverbindungen (1) werden im Reaktionsmedium lösliche Metallverbindungen eingesetzt. Eine bevorzugte Gruppe dieser Metallverbindungen hat die allgemeine Formel

$$M_iX_mY_n \qquad (I)$$

worin M für ein neutrales oder positiv geladenes Metallatom steht, X ein Anion ist, Y ein neutraler Ligand ist, i eine ganze Zahl mit dem Wert ≥ 1 ist, m und n den Wert 0 haben oder ganze Zahlen mit einem Wert ≥ 1 sind, wobei (m + n) einen zum Ladungsausgleich und zur koordinativen Absättigung vom $M_i$ ausreichenden Wert hat.

M kann aus einem beliebigen Metall des Periodensystems ausgewählt werden. Allerdings muß das Metalloxid des Metalls leichter zu reduzieren sein als die Oxidmatrix. Bevorzugte Metalle sind die Übergangsmetalle einschließlich der Lanthaniden und Actiniden ( z. B. Ag, Cd, Co, Cu, Fe, Mn, Mo, Ni, Pb, Pd, Pt, Re, Ru, V, W, U etc.) und die Hauptgruppenmetalle Gallium, Indium, Thallium, Zinn, Blei, Antimon und Wismut.

Die Metallverbindungen können auch mehrere Metallatome enthalten (d.h. i ist eine ganze Zahl > 1), die gleich oder unterschiedlich sein können, z.B. in Form von mehrkernigen Komplexen oder in Form von Alkali- oder Erdalkalimetall-Salzen von Metallkomplexanionen. Die weiter unten verwendete vereinfachte Formel $MX_mY_n$ schließt den Fall i > 1 ein. Die eventuelle Ladung des Metallatoms entspricht den üblichen Oxidationsstufen der genannten Elemente.

X steht in der obigen allgemeinen Formel (I) für ein Anion, das der Metallverbindung Löslichkeit im Reaktionsmedium verleiht. X darf eine Komplexbildung durch die weiter unten besprochene bifunktionelle, zur Komplexbildung befähigte Gruppe nicht verhindern. Das Anion kann einfach oder gegebenenfalls auch mehrfach negativ geladen sein.

Zu diesen Anionen können z.B. die Halogenide, Sulfat und Phosphat gehören. Bevorzugt werden jedoch Anionen, die sich bei der anschließenden Oxidation der Komposit-Materialien rückstandsfrei zu flüchtigen Verbindungen zersetzen. Dies sind vor allem Anionen, die sich aus den Elementen Kohlenstoff, Stickstoff, Sauerstoff und Wasserstoff ableiten.

Beispiele für einfach negativ geladene Anionen dieser Art sind: Hydroxyl, Nitrit, Nitrat, Azid, Cyanid, Hydrogencarbonat, Alkanolate, wie Methylat, Ethylat, Isopropylat und Butylat, Phenolat, Alkanoate, wie Formiat, Acetat und Propionat, Benzoat und Hydrid. Auch komplexbildende einwertige Anionen, die eine zusätzliche Koordinationsstelle in Form eines Sauerstoff- oder Stickstoffatoms oder einer Doppel- oder Dreifachbindung aufweisen, können eingesetzt werden, z.B. Acetylacetonat, das Troponolatanion, Acrylat- und gamma-Aminocarboxylat-Verbindungen, ferner negativ geladene, π-Komplexe bildende aromatische Systeme, wie das Cyclopentadienyl- oder Pentamethylcyclopentadienylanion.

Die erfindungsgemäß verwendbaren zweifach negativ geladenen Anionen wirken meist zugleich als zwei- oder mehrzähnige Komplexbildner. Beispiele sind Carbonat, Oxalat, Tartrat, Maleinat, Succinat, Phthalat, Glykolat und Brenzcatechinat. Gegebenenfalls können auch Anionen mit mehr als zwei negativen Ladungen eingesetzt werden, z.B. Citrat.

Die ganze Zahl m wird durch die Ladung des Metallions und die Ladung des Anions bestimmt, so daß die Verbindung $M_iX_nY_m$ neutral ist. Falls das Metallatom oder die Metallatome keine Ladung tragen, ist m = 0. Es können auch verschiedene Anionen X in den Metallverbindungen auftreten. Jedes individuelle m ist dann so festgelegt, daß die Summe aller Ladungen der verschiedenen Anionen der Ladung des Metallions oder der Metallionen entspricht.

Y steht in der obigen allgemeinen Formel für einen neutralen Liganden, der einzähnig, zweizähnig oder auch mehrzähnig sein kann und bevorzugt nur die Elemente Kohlenstoff, Wasserstoff, Sauerstoff, Stickstoff und Schwefel enthält.

Beispiele für einzähnige neutrale Liganden dieser Art sind Wasser, Kohlenmonoxid, Stickstoffmonoxid, Stickstoffdioxid, Ammoniak, primäre, sekundäre und tertiäre Amine, Alkylreste, Liganden mit einer an der Koordination beteiligten Doppel- oder Dreifachbindung, wie Ethylen, Acetylen und auch Sauerstoff, und $\sigma$-gebundene Arylreste, wie Phenyl. Beispiele für zweizähnige neutrale Liganden sind $\beta$-Ketocarbonsäureester, wie Acetessigester, primäre, sekundäre und tertiäre Diamine, wie Ethylendiamin und 2,2-Dipyridyl, und Liganden mit mehreren an der Koordination teilnehmenden Doppel- und Dreifachbindungen, wie Cyclooctadien und Butadien-Einheiten. Auch neutrale Verbindungen der oben aufgeführten Elemente mit mehr als zwei koordinierenden Elektronenpaaren können erfindungsgemäß als Liganden eingesetzt werden, wie $\eta^6$-gebundene aromatische Verbindungen, z.B. $\eta^6$-Benzol, Cyclooctatetraen oder $\sigma$-bindende drei- und mehrzähnige Liganden, wie z.B. Terpyridyl, Diethylenglykoldimethylether und Kronenether. Es muß jedoch darauf geachtet werden, daß in der Metallverbindung mindestens eine Koordinationsstelle, die durch ein Anion oder einen neutralen Liganden besetzt ist, leicht durch einen anderen Liganden besetzt werden kann.

Die Zahl der neutralen Liganden, d.h. n, kann 0 sein. Wenn sie größer als 0 ist, richtet sich ihr Wert nach den freien Koordinationsstellen, die nach der eventuellen Besetzung durch die Anionen X am Metallatom verbleiben. Die Gesamtzahl der Koordinationstellen an einem gegebenen Metallatom oder -ion ist dem Fachmann bekannt.

Konkrete Beispiele für erfindungsgemäß besonders bevorzugte Metallverbindungen sind: $AgNO_3$, $Co(NO_3)_2$, $Co(acetat)_2 \cdot 4H_2O$, $Co(CO)_3(NO)$, $(\eta^3\text{-Allyl})Co(CO)_3$, $(\eta^6\text{-}C_6H_6)Cr(CO)_3$, $Cu(acetat)_2 \cdot H_2O$, $Na_2[Cu(CN)_3] \cdot 3H_2O$, Fe(acetylacetonat)$_3$, $Fe(NO_3)_3$, $Fe(CO)_5$, [Fe(ethylendiamin)$_3$]$Cl_2$, $(\eta^5\text{-}C_5H_5)$ $(CO)_2$Mn(cycloocten), $(\eta^6\text{-}C_6H_6)Mo(CO)_3$, $Ni(NO_3)_2 \cdot 6H_2O$, $Ni(acetat)_2 \cdot 4H_2O$, [Ni(ethylendiamin)$_2$] (acetat)$_2$, $Ni(CO)_4$, $Pb(C_6H_5)_4$, Pd(acetylacetonat)$_2$, Pt(acetylacetonat)$_2$, Bis(cycloocta-1,5-dien)platin(0), $V(CO)_6$, $(\eta^6\text{-}C_6H_6)W(CO)_3$ und $U(C_8H_8)_2$. Beispiele für mehrkernige Metallverbindungen oder Salze von Metallkomplexanionen sind: $Ru_3(CO)_{12}$, $Fe_2(CO)_9$, $Mn_2(CO)_{10}$, $Re_2(CO)_{10}$, $Co_2(CO)_8$, $Na_2$ $[PtCl_6]$ und $K_2[PtCl_6]$.

Es können eine oder mehrere der Metallverbindungen (I) eingesetzt werden.

**Bifunktionelle Verbindungen**

Die Ausgangsverbindungen (2) sind im Reaktionsmedium lösliche, bifunktionelle Verbindungen, die mindestens eine zur Koordination des Metalls befähigte Gruppe und mindestens eine bei der Polykondensation ein anorganisches Netzwerk ausbildende Gruppe aufweisen. Eine bevorzugte Gruppe derartiger bifunktioneller Verbindungen kann durch die folgende allgemeine Formel dargestellt werden:

$$A_gz[ER_oR'_p]_h \qquad (II)$$

worin A die Gruppe darstellt, die zu einer Komplexierung des Metalls der Metallverbindung (1) befähigt ist, z eine im Reaktionsmedium der hydrolytischen Polykondensation inerte, hydrolysestabile Brückengruppe ist und $-[ER_oR'_p]$ eine Gruppe ist, die bei der Polykondensation ein anorganisches Netzwerk ausbildet, g, h und o ganze Zahlen mit einem Wert > 0 sind, p den Wert 0 hat oder eine ganze Zahl mit einem Wert $\geq 1$ ist, wobei (o + p) einen zum Ladungsausgleich mit E ausreichenden Wert hat.

Die komplexbildende Gruppe A ist ein Elektronendonor, der gegebenenfalls durch Rückbindung vom Metall in eventuelle $\pi$-Orbitale der Gruppe A auch Elektronenakzeptor-Eigenschaften aufweisen kann. Die Gruppe A kann elektrisch neutral oder negativ geladen sein. Sie setzt sich vorzugsweise aus Elementen zusammen, die bei der Oxidation der Komposit-Verbindungen in flüchtige Verbindungen überführt werden; also aus den Elementen Kohlenstoff, Stickstoff, Sauerstoff, Schwefel und Wasserstoff. Die Bindung an das Metall kann über eine $\sigma$- oder eine $\pi$-Bindung stattfinden. Es können auch mehrere Gruppen A in der bifunktionellen Verbindung (II) anwesend sein, die verschieden sein können; g ist dann größer als 1. Wenn es die sterischen Gegebenheiten zulassen, bilden diese Gruppen A mit der Metallverbindung einen Chelatkomplex.

Beispiele für erfindungsgemäße komplexbildende Gruppen A sind: Primäre, sekundäre und tertiäre Amine, Nitril, Isonitril, Thiocyanat, Isothiocyanat, Cyanat, Isocyanat, Azid, Thiolat, Sulfinat, Sulfonat, Carboxylat, Carbonyl, Alkoholat, Kohlenwasserstoffreste mit Doppel- und Dreifachbindungen, wie z.B. Vinyl und Ethinyl, und aromatische Reste, wie z.B. das Cyclopentadienylanion, Phenyl, Furyl, Thienyl und Pyridyl. Besonders bevorzugt sind primäre, sekundäre und tertiäre Amine und Reste mit einer Doppelbindung.

Beispiele für bevorzugte Molekülreste, die 2 komplexbildende Gruppen A aufweisen, sind der Ethylendiaminrest sowie seine alkylierten, sekundären und tertiären Analoga, der Glykolatrest, der $\beta$-Ketocarbonsäurerest oder dessen Ester, der Acetylacetonatrest, der Butadienrest, der Cyclooctadienrest und der Acrylsäure- oder Acrylatrest.

Die Auswahl des Restes A richtet sich nach den Eigenschaften der verwendeten Metallverbindung $M(X)_m(Y)_n$ und nach den Eigenschaften der zweiten in der bifunktionellen Verbindung noch vorhandenen Gruppe, die bei der Polykondensation ein anorganisches Netzwerk ausbilden kann. So wird man die Gruppe A so wählen, daß sie im Reaktionsmedium nicht mit dem Zentralatom E der Netzwerk-bildenden Gruppe $-[ER_oR'_p]$ (siehe unten) reagiert, sondern

möglichst ausschließlich mit der Metallverbindung. Falls z.B. Silicium das Zentralatom E der Netzwerk-bildenden Gruppe ist, können eine oder mehrere Amingruppen vorteilhaft als Gruppe A verwendet werden, um geeignete Metallverbindungen, z.B. Nickel- oder Eisenverbindungen, zu komplexieren. Wenn Aluminium das Netzwerk-bildende Zentralatom ist, wird vorteilhafterweise ein ungesättigter aliphatischer oder aromatischer Rest A zur Komplexierung geeigneter Metallionen, z.B. Eisen oder Platin, eingesetzt. Dem Fachmann ist die Abschätzung geläufig, welche Metallatome sich mit welchen komplexbildenden Gruppen A komplexieren lassen, ohne daß A bevorzugt mit $-[ER_oR'_p]$ reagiert.

Die Netzwerk-bildende(n) Gruppe(n) $-[ER_oR'_p]_h$ der bifunktionellen Verbindung (II) enthält ein Zentralatom E, das ausgewählt ist aus den Elementen Silicium, Aluminium, Titan, Zirkon, Zinn, Germanium, Bor, Phosphor und Arsen. An dieses Zentralatom ist die Brückengruppe z gebunden, sowie mindestens eine hydrolysierbare Gruppe R, wie sie weiter unten bei den Verbindungen der Formel (III), die als Netzwerkbildner (3) eingesetzt werden können, definiert wird, und gegebenenfalls eine oder mehrere nichthydrolysierbare Gruppen R', wie sie ebenfalls weiter unten bei den Netzwerkbildnern definiert werden. Wenn neben der Metallverbindung (1) und der bifunktionellen Verbindung (2) kein Netzwerkbildner (3) eingesetzt wird, muß die Netzwerk-bildende Gruppe der bifunktionellen Verbindung (2) mindestens 2 hydrolysierbare Gruppen R aufweisen, d.h $o \geq 2$. Falls ein Netzwerkbildner (3) verwendet wird, genügt eine hydrolysierbare Gruppe R; in diesem Fall ist $o \geq 1$. Die Summe $(o + p)$ hat einen zum Ladungsausgleich von E ausreichenden Wert, der von den einzelnen Netzwerk-bildenden Elemente abhängt. Die Summe $(o + p + 1)$ entspricht der bei den Netzwerkbildnern besprochenen Summe $(q + r)$.

Die bifunktionelle Verbindung (II) kann mehrere zur Netzwerkbildung befähigte Gruppen aufweisen; h in der Formel (II) ist dann > 1. Aus Gründen der Einfachheit werden im folgenden die Indices g und h bei der Formel (II) weggelassen, die dann also $AzER_oR'_p$ lautet. Dies soll einschließen, daß auch mehrere Gruppen A und $ER_oR'_p$ anwesend sein können.

Die Brückengruppe z ist eine im Reaktionsmedium der hydrolytischen Polykondensation inerte, hydrolysestabile, aus den Elementen C, H, O, N und S gebildete Gruppe, die die Gruppe(n) A und die Gruppe(n) $-ER_oR'_p$ verknüpft. Sie besteht aus einer fakultativen Spacer-Gruppe z', die an A geknüpft ist und gegebenenfalls auch mehrere Gruppen A untereinander verbindet, und aus einer oder mehreren Gruppen C, die die Gruppe z mit dem Zentralatom der polykondensierbaren Gruppe, also E, verknüpft:

A-z'-A-z'C-E

C kann im Extremfall nur aus einer Einfachbindung bestehen, z.B.: Phenyl-Si-$(R^1)_o(R^2)_p$, wobei Phenyl die funktionelle Gruppe A darstellt, die z.B. als Ligand für ein Molybdän-, Chrom- oder Manganion oder -atom dienen kann. C kann weiter z.B. eine Methylen- oder Methin-Gruppe, ein tertiäres Kohlenstoffatom oder eine Alkoholat-, Carbonyl- oder Carboxylat-Gruppe oder auch ein einfaches oder konjugiertes Doppel- oder Dreifachbindungssystem, wie beispielsweise ein Cyclopentadienylanion, sein.

Auf jeden Fall muß die Gruppe C in einer speziellen erfindungsgemäßen bifunktionellen Verbindung $A\text{-}z'C\text{-}ER_oR_p$ so beschaffen sein, daß die Hydrolyse der Bindung zwischen C und E so langsam verläuft, daß sie bis zum Ende der Hydrolyse- und Polykondensationsreaktion von $-ER_oR'_p$ nicht merklich hydrolysiert wird. Dies hängt natürlich nicht nur von der Beschaffenheit von C, sondern auch von E und dessen hydrolysierbaren Resten R ab. Aufgrund der vorhandenen Daten über Hydrolysegeschwindigkeiten einzelner Gruppen ist dem Fachmann eine Abschätzung geläufig.

Die fakultative Spacer-Gruppe z' verbindet die Gruppe A mit der Gruppe C und gegebenenfalls verschiedene Gruppen A miteinander. Wenn A und C direkt verknüpft sind, tritt keine Spacer-Gruppe z' auf. z' besteht im allgemeinen aus Alkylen-, Arylen- oder Alkylenarylengruppen, die durch Sauerstoff- und/oder Schwefelatome unterbrochen sein können.

Um die erfindungsgemäßen bifunktionellen Verbindungen der Formel (II) weiter zu erläutern, werden die folgenden konkreten Beispiele für erfindungsgemäß bevorzugte bifunktionelle Verbindungen gegeben:
$H_2N\text{-}(CH_2)_3\text{-}Si(OC_2H_5)_3$, $(C_2H_5)_2N(CH_2)_3Si(OC_2H_5)_3$,
$(CH_3)_2N(CH_2)_3Si(OC_2H_5)_3$, $H_2N\text{-}C_6H_4\text{-}Si(OCH_3)_3$,
$(CH_3)_2N\text{-}CH_2\text{-}CH_2\text{-}N(CH_3)\text{-}(CH_2)_3\text{-}Si(OC_2H_5)_3$,
$H_2N\text{-}CH_2\text{-}CH_2\text{-}NH\text{-}(CH_2)_3\text{-}Si(OCH_3)_3$,
$H_2N\text{-}(CH_2)_2\text{-}NH\text{-}(CH_2)_2\text{-}NH\text{-}(CH_2)_3\text{-}Si(OCH_3)_3$,
$CN\text{-}(CH_2)_3\text{-}Si(OCH_3)_3$, $HO(O)C\text{-}HC{=}CH\text{-}O\text{-}(CH_2)_3\text{-}Si(OCH_3)_3$,
$H_5C_6\text{-}(CH_2)_3\text{-}Si(OC_2H_5)_3$, $CH_2{=}CH\text{-}Si(OC_2H_5)_3$,

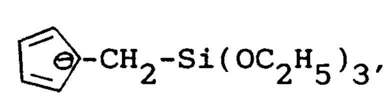

$CH_2{=}CH\text{-}CH_2\text{-}Si(OC_2H_5)_3$,

$OCN-CH_2-CH_2-CH_2-Si(OC_2H_5)_3$, $HS-CH_2-CH_2-CH_2-Si(OC_2H_5)_3$,

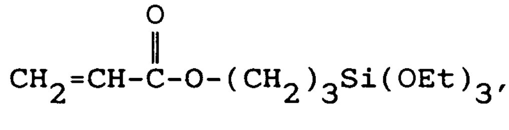

$^-OOC-CH_2-CH_2-CH_2-Si(OC_2H_5)_3$

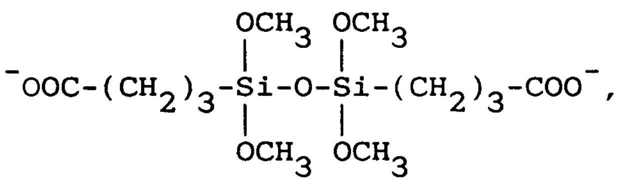

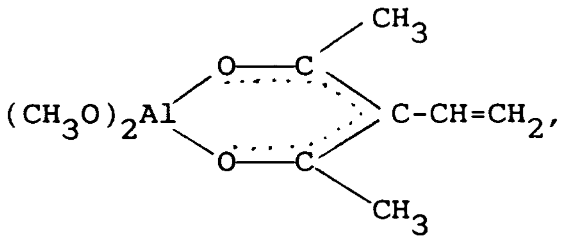

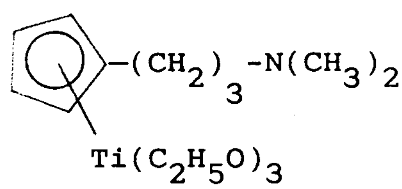

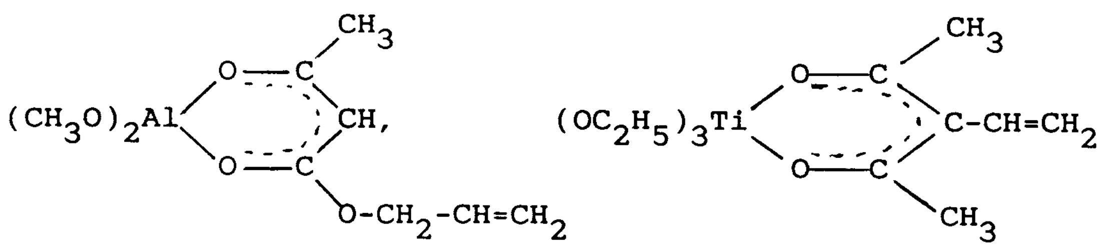

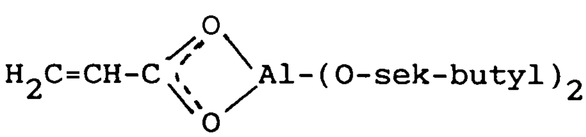

Diese Verbindungen sind zum Teil im Chemikalienhandel erhältlich oder sie können in bekannter Weise hergestellt werden (siehe z.B. W. Noll: "Chemie und Technologie der Silicone", Verlag Chemie, Weinheim/Bergstraße (1968)).

Erfindungsgemäß können eine oder mehrere verschiedene der oben definierten bifunktionellen Verbindungen eingesetzt werden. Diese können gegebenenfalls auch in vorkondensierter Form vorliegen.

**Netzwerkbildner**

Der zur Polykondensation befähigte Netzwerkbildner (3), der nicht obligatorisch verwendet werden muß, bevorzugt aber eingesetzt wird, ist ebenfalls eine im Reaktionsmedium lösliche Verbindung und hat bevorzugt die allgemeine Formel

$$ER_qR'_r \qquad (III)$$

Darin ist das Element E bevorzugt aus Silicium, Aluminium, Titan, Zirkonium, Zinn, Germanium, Bor, Phosphor und Arsen ausgewählt. Die Gruppen R sind hydrolysierbare Gruppen, die Gruppen R' sind nicht oder schwer hydrolysierbare Gruppen. Ihre spezielle Bedeutung wird bei den Verbindungen $ER_qR'_r$ der einzelnen Elemente E besprochen. Der Index q ist bei mindestens einem der eingesetzten Netzwerkbildner eine ganze Zahl ≥ 2, r ist = 0 oder eine ganze Zahl ≥ 1 und die Summe (q + r) hat einen zum Ladungsausgleich mit E ausreichenden Wert.

Bevorzugte Netzwerk-bildende Verbindungen des Siliciums weisen die allgemeine Formel

$$R_qSiR'_r$$

auf, wobei q + r = 4 ist, und r 0, 1 oder 2 ist (einwertige Reste R und R' vorausgesetzt);
die Reste R, die gleich oder verschieden sein können und von denen mindestens 2 vorhanden sind, hydrolysierbare Reste wie Wasserstoff, Hydroxy, Halogen, Alkoxy, Alkoxyalkoxy, Acyl, Acyloxy, Alkoxycarbonyl oder $NR''_2$ (R" = H und/oder Alkyl) sind;
die Reste R', die gleich oder verschieden sein können, nicht-hydrolysierbare organische Gruppen wie Alkyl, Aryl, Arylalkyl und Alkylaryl sind, wobei diese Reste durch O- oder S-Atome unterbrochen sein können.

Spezielle Beispiele für die Gruppen R sind Methoxy, Ethoxy, n- und i-Propoxy, n-, sek- und t-Butoxy, Isobutoxy, β-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl und Ethoxycarbonyl.

Spezielle Beispiele für die Gruppen R' sind Methyl, Ethyl, 3-Phenylethyl und 4-i-Propylphenyl.

Konkrete Beispiele für Verbindungen der Formel $R_qSiR'_r$ sind:

r = 0: $Si(OCH_3)_4$, $Si(OC_2H_5)_4$, $Si(O\text{-n- oder -i-}C_3H_7)_4$,
$Si(OC_4H_9)_4$, $SiCl_4$, $HSiCl_3$, $Si(OOCCH_3)_4$.
r = 1: $CH_3\text{-}Si\text{-}Cl_3$, $CH_3\text{-}Si\text{-}(OC_2H_5)_3$, $C_2H_5\text{-}Si\text{-}Cl_3$,
$C_2H_5\text{-}Si\text{-}(OC_2H_5)_3$, $C_3H_7\text{-}Si\text{-}(OCH_3)_3$,
$C_6H_5\text{-}Si\text{-}(OC_2H_5)_3$, $C_6H_5\text{-}CH_2\text{-}Si\text{-}(OC_2H_5)_3$
r = 2: $(CH_3)_2\text{-}Si\text{-}Cl_2$, $(CH_3)_2\text{-}Si\text{-}(OC_2H_5)_2$,
$(C_2H_5)_2\text{-}Si\text{-}(OC_2H_5)_2$, $(C_2H_5O)_2(CH_3)Si\text{-}CH_2\text{-}C_6H_5$.

Diese Silane sind zum Teil Handelsprodukte oder sie lassen sich nach bekannten Methoden herstellen; vgl. W. Noll, "Chemie und Technologie der Silicone", Verlag Chemie, Weinheim/Bergstraße (1968).

Als Netzwerkbildner verwendbare Verbindungen des Aluminiums sind Verbindungen der allgemeinen Formel

$$AlR_qR'_r$$

in welcher die Reste R, die gleich oder verschieden sein können, für hydrolysierbare Gruppen wie Halogen, Alkyl, Alkoxy, Acyloxy oder Hydroxy stehen oder für die Anionen von Aluminiumsalzen anorganischer oder organischer Säuren, wie z.B. $HNO_3$, $H_2SO_4$, $H_3PO_4$ und Ameisensäure, Essigsäure, Propionsäure und Oxalsäure;
und die Reste R' nicht hydrolysierbare Gruppen bedeuten, die im Fall von Aluminiumverbindungen vorzugsweise Chelatliganden sind, die Sauerstoffatome an den komplexierenden Stellen aufweisen. Solche Chelatliganden sind z. B. Acetylacetonat, Acetessigsäureethylester und Glykolat.

Die als Netzwerkbildner eingesetzten Aluminiumverbindungen sollten mindestens 2 hydrolysierbare Gruppen R aufweisen, d.h. q kann 2 oder 3 sein (bei einwertigen Resten R). Die Zahl der nicht-hydrolysierbaren Reste R' und damit r ist 0 oder 1, im Fall von Chelatbildnern eventuell auch 2. Wird die Aluminiumverbindung neben anderen Netzwerkbildnern eingesetzt, kann die Zahl der hydrolysierbaren Gruppen R auch 1 betragen.

Konkrete Beispiele für erfindungsgemäß bevorzugte Aluminiumverbindungen sind $Al(OCH_3)_3$, $Al(OC_2H_5)_3$, $Al(O\text{-n-}C_3H_7)_3$, $Al(O\text{-i-}C_3H_7)_3$, $Al(OC_4H_9)_3$, $Al(O\text{-i-}C_4H_9)_3$, $Al(O\text{-sek-}C_4H_9)_3$, $AlCl_3$, $AlCl(OH)_2$, Aluminiumformiat, Aluminiumacetat und Aluminiumoxalat sowie die entsprechenden teilweise chelatisierten Verbindungen wie z.B. die Al(acetylacetonat)$(O\text{-i-}C_3H_7)_2$. Bei Raumtemperatur flüssige Verbindungen, wie z.B. $Al(O\text{-sek-}C_4H_9)_3$ und $Al(O\text{-i-}C_3H_7)_3$ werden besonders bevorzugt.

Bei einer weiteren Gruppe von erfindungsgemäß eingesetzten Netzwerkbildnern handelt es sich um solche der allgemeinen Formel

$$E'R_qR'_r$$

in welcher E' für Titan(IV) oder Zirkon(IV) steht, die hydrolysierbaren Gruppen R, die gleich oder verschieden sein können, Halogen, Alkoxy oder Acyloxy sind und die nicht-hydrolysierbaren Gruppen R' insbesondere Chelatliganden sind. Davon abgeleitete Oligomere sind auch als Netzwerkbildner verwendbar. Hinsichtlich der Anzahl der hydrolysierbaren Reste und der Chelatliganden gilt das bereits für die Aluminiumverbindungen Gesagte, woraus sich ergibt, daß bei einwertigen Resten R und R' q in obiger Formel im allgemeinen die Werte 2 bis 4 annimmt und r die Werte 0 bis 2, es sei denn die Titan- und Zirkoniumverbindungen liegen neben anderen Netzwerkbildnern vor, in welchem Fall q auch die Werte 0 und 1 und r Werte bis 4 annehmen kann.

Konkrete Beispiele für Titan- oder Zirkonverbindungen sind $TiCl_4$, $ZrCl_4$, $Ti(OC_2H_5)_4$, $Ti(OC_3H_7)_4$, $Ti(O\text{-}i\text{-}C_3H_7)_4$, $Ti(OC_4H_9)_4$, $Ti(kresyl)_4$, $Zr(O\text{-}i\text{-}C_3H_7)_4$, $Zr(OC_4H_9)_4$, $Ti(acetylacetonat)_2(O\text{-}iC_3H_7)_2$, $Ti(2\text{-}ethylhexoxy)_4$ und andere ein- oder mehrkernige Titan-oder Zirkonkomplexe mit Chelatliganden, die vorzugsweise über Sauerstoff und/oder Stickstoff (z.B. Ethylendiamin, alkylierte Derivate davon und 2,2-Dipyridyl) koordiniert sind, und, falls sie als alleiniger Netzwerkbildner verwendet werden, noch zwei hydrolysierbare Gruppen R aufweisen.

Unter den weiteren, oben noch nicht genannten Netzwerkbildnern, die erfindungsgemäß eingesetzt werden können, befinden sich im Reaktionsmedium lösliche, schwerflüchtige Oxide oder derartige schwerflüchtige Oxide bildende Verbindungen der Elemente B, Ge, Sn, P und As.

Im Reaktionsmedium lösliche, schwerflüchtige Oxide bildende Verbindungen sind z.B. anorganische Säuren, wie Phosphorsäure, Arsensäure und Borsäure, sowie deren Ester. Ferner eignen sich z.B. Halogenide, wie $SnCl_4$ und $PCl_5$, und Alkoxide, wie $Ge(OR'')_4$ und $Sn(OR'')_4$, wobei sich R'' von niederen Alkoholen, wie Methanol, Ethanol, Propanol oder Butanol, ableitet. Die Verwendung von Verbindungen, die neben den hydrolysierbaren Gruppen der eben aufgeführten Verbindungen auch nicht hydrolysierbare Reste R', z.B. Alkyl oder Phenyl, enthalten, ist ebenfalls möglich. Für die Anzahl der hydrolysierbaren Gruppen R gilt das bei für Aluminium- und Titan- und Zirkonium-Verbindungen Gesagte entsprechend.

Es können ein oder mehrere Netzwerkbildner eingesetzt werden, von denen mindestens einer 2 hydrolysierbare Gruppen R aufweisen muß. Gegebenenfalls können die Netzwerkbildner auch in vorkondensierter Form vorliegen.

**Schematische Darstellung des Reaktionsablaufs**

Der Ablauf der erfindungsgemäßen Komplexierungsreaktion und der gleichzeitigen oder nachfolgenden hydrolytischen Polykondensationsreaktion soll an einem konkreten Beispiel schematisch aufgezeigt werden, in dem die Metallverbindung $Pd(acetylacetonat)_2$ (= $Pd(acac)_2$), die bifunktionelle Verbindung $H_2N\text{-}(CH_2)_2\text{-}NH\text{-}(CH_2)_3Si(OC_2H_5)_3$ und der Netzwerkbildner $Si(OC_2H_5)_4$ im Verhältnis 1 : 2 : 8 miteinander umgesetzt werden:

$Pd(acac)_2 + 2\ H_2N\text{-}(CH_2)_2\text{-}NH\text{-}(CH_2)_3Si(OCH_2H_5)_3 + 8\ Si(OC_2H_5)_4$

Das Verfahren kann gegebenenfalls so durchgeführt werden, daß die Reaktion schrittweise verläuft (siehe unten). Der erste Schritt ist dann die Bildung einer Komplexverbindung zwischen der Metallverbindung und der bifunktionellen Verbindung:

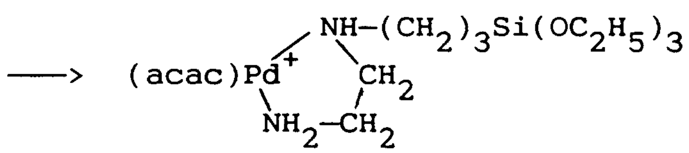

$+ H_2N\text{-}(CH_2)_2\text{-}NH(CH_2)_3Si(OC_2H_5)_3 + acac^- + Si(OC_2H_5)_4$

(gegebenenfalls isolierbares Zwischenprodukt)

Durch anschließende hydrolytische Polykondensation oder durch gleichzeitige hydrolytische Polykondensation und Komplexierung erhält man:

$$\xrightarrow[\text{(Katalysator)}]{H_2O/} 2\ acac^- \ {+}{+}\ Pd^{2+}[H_2N(CH_2)_2NH(CH_2)_3SiO_{3/2}]$$

$$++\ [H_2N(CH_2)_2NH(CH_2)_3SiO_{3/2}]\ ++\ 8SiO_2$$

(Gleichung 1)

Das Zeichen "++" bedeutet, daß die damit verknüpften Formeln nicht isoliert, sondern in einer makromolekularen Einheit vorliegen. Pd muß nicht unbedingt wie in Gleichung 1 nur an eine bifunktionellen Einheit koordiniert sein. Wenn

es die sterischen Gegebenheiten erlauben, können auch 2 oder sogar mehr bifunktionelle Einheiten an das Palladiumkation gebunden sein.

Eine an die Reaktion der Gleichung 1 anschließende vollständige Oxidation mit einem Sauerstoff-haltigem Gas bei höheren Temperaturen (siehe unten) führt zu folgender Reaktion:

$$2\ acac^{-} \ {+}{+}\ Pd^{2+}[H_2N(CH_2)_2NH(CH_2)_3SiO_{3/2}] \ {+}{+}\ [H_2N(CH_2)_2NH(CH_2)_3SiO_{3/2}] \ {+}{+}\ 8SiO_2 \xrightarrow{Oxidation}$$

$$PdO\cdot 2SiO_2\cdot 8SiO_2 + CO,\ CO_2 + H_2O + N_2,\ NO,\ NO_2$$

Falls anschließend reduziert wird, erhält man schließlich:

$$PdO\cdot 10SiO_2 \xrightarrow{z.B.\ H_2} Pd\cdot 10SiO_2$$

In allgemeiner Form geschrieben lautet die Gleichung der Gesamtreaktion der Komplexierung und hydrolytischen Polykondensation wie folgt (M, X, Y, A (als ungeladen angenommen), E, R, R', z, m, n, o, p, q und r haben die oben genannten Bedeutungen; k und l bedeuten das molare Verhältnis der verwendeten Verbindungen $AzER_oR'_p$ (bifunktionelle Verbindung) und $ER_qR'_r$ (Netzwerkbildner) im Vergleich zur Metallverbindung $MX_mY_n$. Dabei ist $k \geq 1$, während $l \geq 0$ ist (siehe unten)):

$$MX_mY_n + k\ AzER_oR'_p + l\ ER_qR'_r \xrightarrow{H_2O}$$

$$X^{-} \ {+}{+}\ (X_{m-1}Y_n)M^{+}(AzEO_{1/2o}R'_p)_k \ {+}{+}\ (EO_{1/2q}R'_r)_l$$

Auch hier kann gegebenenfalls wie im obigen Beispiel eine Zwischenstufe hergestellt werden, und $M^+$ kann gegebenenfalls mit mehr als einer Gruppe ($AzEO_{1/2o}R'_p$) koordiniert sein. "++" hat die gleiche Bedeutung wie oben.

Die anschließende vollständige Oxidation läßt sich allgemein wie folgt darstellen:

$$X^{-} \ {+}{+}\ (X_{m-1}Y_n)M^{+}(AzEO_{1/2o}R'_p)_k \ {+}{+}\ (EO_{1/2q}R'_r)_l \xrightarrow{Oxidation}$$

$$MO_s\cdot(k+l)EO_{1/2(o+p+q+r)} + CO, CO_2 + H_2O + SO_2 + N_2, NO, NO_2$$

Die Zahl der Sauerstoffatome im Metalloxid, s, richtet sich nach der Oxidationsstufe des Metalls.

Wird schließlich eine Reduktion durchgeführt, erhält man:

$$MO_s \cdot (k+l)EO_{1/2(o+p+q+r)} \xrightarrow{\text{Reduktion}} M \cdot (k+l)EO_{1/2(o+p+q+r)}$$

**Beschreibung des Verfahrens**

Die Stufe a) des Verfahrens kann auf zwei verschiedene Arten durchgeführt werden: einmal nach dem sogenannten "in-situ"-Verfahren (Verfahrensvariante A), worin die Metallverbindung (1), die bifunktionelle Verbindung (2) und gegebenenfalls der Netzwerkbildner (3) einer gleichzeitigen Komplexierungs- und hydrolytischen Polykondensationsreaktion unterworfen werden; oder nach der Verfahrensvariante B, worin man zuerst in einem wasserfreien Medium die Komplexbildung zwischen der Metallverbindung (1) und der bifunktionellen Verbindung (2) bewirkt, gegebenenfalls den Komplex isoliert und anschließend, gegebenenfalls in Gegenwart des Netzwerkbildners (3) eine hydrolytische Polykondensation durchführt (Verfahrensvariante B).

Verfahrensvariante A

Hier wird die Herstellung des die Metallverbindung in komplexierter Form enthaltenden Gels in Analogie zu der im Sol-Gel-Prozeß üblichen Art und Weise durchgeführt, indem zu Beginn des Verfahrens das benötigte Wasser auf einmal oder allmählich zugegeben wird. Die Reaktion wird in flüssiger homogener Phase durchgeführt; falls die Ausgangsverbindungen in flüssiger Form vorliegen, kann sich der Einsatz eines Lösungsmittels erübrigen.

Geeignete polare Lösungsmittel für die Durchführung des Sol-Gel-Prozesses sind z.B. niedere Alkanole, wie Methanol, Ethanol und Isopropanol, Ketone, vorzugsweise niedere Dialkylketone wie Aceton und Methylisobutylketon, Ether, vorzugsweise niedere Alkylether, wie Diethylether und Tetrahydrofuran, Amide, wie Dimethylformamid, und Ester, wie Essigsäureethylester, und deren Gemische. Hiervon sind mit Wasser mischbare Lösungsmittel oder Lösungsmittelgemische besonders bevorzugt.

Die Mengenverhältnisse der Ausgangsverbindungen sind je nach den erwünschten Eigenschaften des Komposit-Materials in weiten Bereichen variierbar. Die höchste Metallkonzentration ist erhältlich, wenn die Metallverbindung (1) und die bifunktionelle Verbindung (2) im Verhältnis 1 : 1 ohne Anwesenheit eines Netzwerkbildners (3) verwendet werden. Das Verhältnis 1 : 1 von bifunktioneller Verbindung (2) : Metallverbindung (1) ist gerade ausreichend groß, um eine vollständige Komplexierung des Metall zu gewährleisten. Im allgemeinen werden jedoch höhere Verhältnisse von (2) : (1) gewählt, beispielsweise bis zu 20 : 1 und darüber hinaus.

Falls erwünscht, kann der Metallgehalt sehr gering gehalten werden, indem man zusätzlich zu einem Überschuß der bifunktionellen Verbindung (2) einen größeren Überschuß des Netzwerkbildners (3) einsetzt, beispielsweise im Molverhältnis 1 : 5 : 400 [Metallverbindung (1) : bifunktionelle Verbindung (2) : Netzwerkbildner (3)]. Das Molverhältnis von Metallverbindung (1) zu Netzwerkbildner (3) kann ebenfalls in weiten Bereichen variiert werden; es kann zum Beispiel 2 : 1, 1 : 1, 1 : 5 bis 50 und bis zu 1 : 300 oder darüber hinaus betragen.

Im übrigen gilt, daß das Komposit-Produkt umso poröser wird, je größer der Anteil an der bifunktionellen Verbindung (II) ist, da an den Stellen, wo die bifunktionellen Verbindung (II) in das Netzwerk eingebaut ist, bei der anschließenden oxidativen Behandlung die organischen Bestandteile als Gase entweichen und im Komposit-Material Poren hinterlassen. Auch über den Anteil des Netzwerkbildners (3) ist eine Steuerung der Porosität und der spezifischen Oberfläche möglich.

Die Zugabe der Ausgangsverbindungen und der Reagenzien, insbesondere Wasser, kann auf verschiedene Weise erfolgen. Vor allem die Wasserzugabe kann sehr kritisch sein und wird deshalb weiter unten ausführlich besprochen. Die Zugabe der Metallverbindung (1) und der bifunktionellen Verbindung (2) erfolgt gewöhnlich zu Beginn der Reaktion, wobei bei einem großen Überschuß der Verbindung (2) diese zum Teil auch im Verlauf des Verfahrens zugegeben werden kann. Gewöhnlich wird man die Metallverbindung (1) im Lösungsmittel vorlegen und die bifunktionelle Verbindung (2) dazugeben. Die umgekehrte Reihenfolge kann sinnvoll sein, wenn ohne starken Überschuß an komplexbildender Verbindung eine Komplexierung nur schwer zu erreichen ist.

Falls ein Netzwerkbildner (3) hinzugefügt wird, geschieht dies in der Regel nach der Zugabe der oben genannten Verbindungen, aber vor der Zugabe von Wasser. Falls zwei oder mehr unterschiedlich schnell hydrolysierende Netzwerkbildner zugegeben werden, kann die Zugabe zu unterschiedlichen Zeitpunkten im Verlauf der hydrolytischen Polykondensation geschehen.

Die Wasserzugabe zur Hydrolyse erfolgt bei der Verfahrensvariante A zu oder ab Beginn der Reaktion in einer der im Sol-Gel-Prozeß üblichen Weisen. So kann man die Ausgangsverbindungen, als solche oder gelöst in einem der

oben erwähnten Lösungsmittel mit der stöchiometrisch erforderlichen Menge an Wasser, bevorzugt aber mit einem Überschuß an Wasser, auf einmal oder stufenweise in Kontakt bringen. Die beste Art und Weise des Inkontaktbringens hängt unter anderem von der Reaktivität der eingesetzten Ausgangsverbindungen ab. So kann man z.B. die gelösten Ausgangsverbindungen langsam zu einem Überschuß an Wasser tropfen oder man gibt Wasser in einer oder mehreren Portionen den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionsgefäß einzutragen. Als besonders geeignet hat sich in vielen Fällen die Eintragung der Wassermengen in das Reaktionsgemisch mit Hilfe von feuchtigkeitsbeladenen Adsorbentien, z. B. Molekularsieben, und wasserhaltigen organischen Lösungsmitteln, z. B. 80%igem Ethanol, erwiesen. Die Wasserzugabe kann auch über eine Reaktion erfolgen, bei der Wasser gebildet wird, z. B. bei der Esterbildung aus Säure und Alkohol.

In vielen Fällen wird es bevorzugt, die Wasserzugabe in mehreren Stufen, z. B. in drei Stufen, durchzuführen. Dabei wird in der ersten Stufe z. B. ein Zehntel bis ein Zwanzigstel der zur Hydrolyse stöchiometrisch benötigten Wassermenge zugegeben. Nach kurzem Rühren erfolgt die Zugabe von einem Fünftel bis einem Zehntel der stöchiometrischen Wassermenge und nach weiterem kurzen Rühren wird schließlich eine stöchiometrische Wassermenge zugegeben, so daß am Schluß ein leichter Wasserüberschuß vorliegt.

Die Hydrolyse erfolgt in der Regel bei Temperaturen zwischen -20 und 130°C, vorzugsweise zwischen 0°C und dem Siedepunkt des gegebenenfalls eingesetzten Lösungsmittels. Ein besonders bevorzugter Temperaturbereich liegt bei ungefähr 20 - 70°C.

Die Hydrolyse und Polykondensation mit gleichzeitiger Metallkoordinierung kann gegebenfalls unter Zusatz eines herkömmlichen Katalysators, wie einer Brönsted-Säure oder -Base, z.B. einer Protonensäure, einem Metallhydroxid oder einem Amin, erfolgen. Beispiele für geeignete Katalysatoren sind organische oder anorganische Säuren, wie Salzsäure oder Essigsäure, organische oder anorganische Basen, wie Ammoniak, Alkali- oder Erdalkalimetallhydroxide, z. B. Natrium-, Kalium- oder Calciumhydroxid, und im Reaktionsmedium lösliche Amine, z.B. niedere Alkylamine oder Alkanolamine. Flüchtige Säuren und Basen, insbesondere Salzsäure, Ammoniak und Triethylamin, werden besonders bevorzugt. Wenn die verwendete bifunktionelle Verbindung (2) eine Brönsted-Base ist, wird eine basische Katalyse bevorzugt, um den als Ligand vorgesehenen Teil des Moleküls nicht durch Protonierung zu desaktivieren.

Die Zeitdauer, die zum Erreichen der vollständigen Hydrolyse und dem Ende der Polykondensationsreaktion erforderlich ist, hängt von den eingesetzten Ausgangsverbindungen und den Reaktionsbedingungen ab und kann durch wenige Testversuche leicht ermittelt werden.

Verfahrensvariante B

Gegebenenfalls läßt sich das Verfahren so durchführen, daß zunächst die Komplexierungsreaktion zwischen der Metallverbindung und der bifunktionellen, als Komplexligand dienenden Verbindung bewirkt wird und dann im Anschluß - gegebenenfalls nach vorheriger Isolation des Komplexes - die hydrolytische Polykondensation. Die Metallverbindung wird möglichst unter einer Schutzgasatmosphäre in einem der oben aufgeführten wasserfreien Lösungsmittel gelöst. Dazu wird im allgemeinen bei niedriger Temperatur, vorzugsweise ungefähr 0°C, die bifunktionelle, komplexbildende Verbindung (2) getropft. Die Wahl des günstigsten Lösungsmittels sowie die weiteren Reaktions- und Aufarbeitungsbedingungen hängen vom jeweiligen zu bildenden Metallkomplex ab und sind dem Fachmann bekannt.

Der Komplex kann dann mit oder ohne Zugabe eines oder mehrerer Netzwerkbildner der Formel (3) einer hydrolytischen Polykondensation unterworfen werden, wie sie bei der Verfahrensvariante A beschrieben ist.

Alternativ kann ohne Isolierung des Komplexes Wasser zur Reaktionsmischung gegeben werden, um eine hydrolytische Polykondensation des zur hydrolytischen Polykondensation befähigten Teils des bifunktionellen Komplexliganden zu bewirken. Falls erwüscht, werden außerdem ein oder mehrere Netzwerkbildner (3), im allgemeinen vor der Wasserzugabe, hinzugefügt. Die weitere Reaktion verläuft genauso, wie es für die Verfahrensvariante A beschrieben ist.

Nach Beendigung der Reaktion nach einer der oben beschriebenen Verfahrensvarianten wird das überschüssige Lösungsmittel gegebenfalls vorsichtig aus dem Sol abdestilliert, oder man läßt es in einem offenen Gefäß verdunsten. Das so erhaltene Polykondensat ist gel- bis glasartig.

Anschließend wird das Polykondensat bei Temperaturen bis zu 200°C, vorzugsweise bei ungefähr 120°C, mehrere Stunden, bevorzugt 2 bis 4 Stunden, und vorzugsweise im Vakuum getrocknet, um Wasser- und Lösungsmittelreste zu entfernen.

Vor der Weiterverarbeitung wird das getrocknete Polykondensat nach den üblichen Methoden pulverisiert.

Oxidation des Polykondensats

Die Oxidation des Polykonensationsprodukts kann naßchemisch in einem flüssigen Reaktionsmedium oder durch Calcinieren in Gegenwart eines gasförmigen Oxidationsmittels bewirkt werden. Im allgemeinen dient Sauerstoff als gasförmiges Oxidationsmittel. Eine bevorzugte Reaktions-Gasmischung ist Luft oder eine andere Gasmischung, die

80% eines inerten Gases und 20% Sauerstoff enthält.

Die Oxidation wird im allgemeinen durch Überleiten des trockenen, Sauerstoff-haltigen Gases über das Kondensationsprodukt bei Temperaturen von 200 bis 700°C, bevorzugt bei 300 bis 500°C, durchgeführt. Bei tieferen Reaktionstemperaturen verbleiben noch Reste der Elemente C, N und/oder S im Polykondensat, was erwünscht sein kann. In dieser Erfindung ist es jedoch bevorzugt, diese Elemente bei der Calcinierung vollständig oxidativ zu entfernen. Es ist vorteilhaft, die Temperatur dafür nicht höher als nötig zu wählen, um die Oberflächendiffusion der Metallkationen und damit die Bildung größerer Oxidpartikel so gering wie möglich zu halten. Die erforderliche Temperatur variiert in Abhängigkeit von der Beschaffenheit der organischen Reste im Polykondensat. Die untere Temperaturgrenze, ab der eine vollständige Oxidation stattfindet, kann mit Hilfe der Differential-Thermogravimetrie ermittelt werden. Gemäß dieser Methode wird während der Oxidation bei verschiedenen Temperaturen das Restgewicht der Probe bestimmt; die Temperatur, ab der das Restgewicht konstant ist, ist die untere Temperaturgrenze für eine vollständige Oxidation.

Die Dauer der Reaktion beträgt im allgemeinen einige Minuten bis einige Stunden, bevorzugt etwa 30 Minuten. Sie kann im Bedarfsfall durch Gravimetrie ermittelt werden, indem man den Zeitpunkt feststellt, ab dem Massenkonstanz auftritt, oder durch elementarchemische Analyse, die nach Beendigung der Reaktion die Elemente C, N und S nicht mehr nachweist.

Im Fall von Pt und Ag bildet sich bei dieser Oxidationsmethode direkt das Metall in der Oxidmatrix, da sich die Oxide bei höheren Temperaturen in die Elemente zersetzen.

Die erfindungsgemäß bevorzugten Oxidationsprodukte enthalten in großer Reinheit nur noch die Zentralatome des Netzwerkbildners (also Si, Al, Ti, Zr, Ge, Sn, B, P und As) als Oxide (Oxidmatrix) und Metalloxide oder in gewissen Fällen (z.B. Pt, Ag) das elementare Metall.

Bei der naßchemischen Oxidation werden Peroxogruppenenthaltende Oxidationsmittel verwendet, z.B. Wasserstoffperoxid, Persäuren, deren Salze und Ester, und Perborate. Metallverbindungen sind als Oxidationsmittel weniger bevorzugt, da sie das Polykondensat kontaminieren können. Als Lösungsmittel kommen die üblichen organischen Lösungsmittel und insbesondere Wasser in Frage. Im allgemeinen wird im neutralen bis sauren pH-Bereich gearbeitet.

Man kann die Reaktion so durchführen, daß noch Reste der Elemente C, N und S im Polykondensat verbleiben. Um eine vollständige Oxidation dieser Elemente zu erreichen, ist in der Regel ein Erwärmen des Oxidationsmediums notwendig. Das Ende der Reaktion kann durch Aufhören der Gasentwicklung erkannt werden, oder man kennt die Reaktionsdauer aus Testversuchen, in denen das Reaktionsprodukt bei der Analyse die Elemente C, N und S nicht mehr aufwies.

Es kann vorteilhaft sein, die Oxidation in einem flüssigen Medium, die dann nicht vollständig zu sein braucht, mit einer anschließenden Calcinierung in Gegenwart eines gasförmigen Oxidationsmittels zu kombinieren.

Reduktion der Oxidpartikel in der Oxidmatrix

Die Reduktion der Oxidpartikel in der Oxidmatrix zu Metallpartikeln kann entweder in einem flüssigen Medium oder durch ein gasförmiges Reduktionsmittel stattfinden. Auch hier werden, um Oberflächendiffusion der Metallatome zu größeren Partikeln zu vermeiden, möglichst niedrige Temperaturen bevorzugt. Bei beiden Methoden variieren Reaktionstemperatur und -dauer beträchtlich in Abhängigkeit vom Reduktionspotential des Metalls.

Die Reduktion durch ein gasförmiges Medium kann beispielsweise mit Wasserstoff oder Kohlenmonoxid durchgeführt werden. Kohlenmonoxid ist nur bei Metallen verwendbar, die keine Metallcarbonylverbindungen bilden und ein niedriges Reduktionspotential aufweisen, also z.B. bei Palladium, das aus Palladiumoxid in einer Oxidmatrix nach zweistündiger Behandlung im Kohlenmonoxidstrom bei 200°C entsteht. Im allgemeinen wird Wasserstoff als reduzierendes Gas bevorzugt. Man läßt dieses Gas bei Atmosphärendruck oder erhöhtem Druck bei Temperaturen zwischen Raumtemperatur (z.B. bei Pd) und höchstens 900°C, bevorzugt 400-500°C (z.B. bei Ni, Fe, Cu und Co) einige Stunden, bevorzugt zwischen 1 (Pd) und 5 Stunden (Ni, Fe, Cu, Co) über die zu reduzierende Probe strömen. Individuelle Reaktionsbedingungen können mit Testversuchen unter Auswertung der Probe durch Pulverdiffraktometrie, Wasserstofftitration, ESCA-Spektroskopie, SIMS, SNMS oder magnetische Messungen und dergleichen ermittelt werden.

Die Reduktion in flüssiger Phase wird im allgemeinen mit einer konzentrierten wässrigen Hydrazinlösung durchgeführt. Wahlweise kann dabei ein weiteres polares Lösungsmittel, wie Alkohole, z.B. Methanol, Ethanol oder auch hochsiedende Di- und Trialkohole, und ein saurer oder basischer Katalysator verwendet werden. Die Reaktion wird in Abhängigkeit vom Reduktionspotential des Metalls bei Raumtemperatur bis zur Temperatur des Siedepunkts der Reaktionsmischung durchgeführt. Die Beendigung der Reaktion kann wie oben ermittelt werden.

Auch in diesem Fall kann es von Vorteil sein, die Reduktion zuerst im flüssigen Medium und anschließend mit einem gasförmigen Reduktionsmittel durchzuführen.

Die Produkte der oben beschriebenen Oxidationsreaktion, die Metalloxid-Partikel enthaltenden Komposit-Materialien, sind meistens tief gefärbt. Die Metallpartikel enthaltenden Komposit-Materialien sind blau bis schwarz gefärbt.

Die Größe der Metallpartikel entspricht im wesentlichen der der Metalloxid-Teilchen. Ihr mittlerer Teilchendurchmesser, der mit Hilfe der Scanning Transmission Electron Microscopy bestimmt werden kann, liegt gewöhnlich im Bereich von 0,2 bis 100 nm, typischerweise 0,5 bis 70 nm und vorzugsweise 1 bis 60 nm.

Die Größe der Metallpartikel hängt in erster Linie von der Art des Metalls ab. Sehr kleine Metallpartikel mit einem mittleren Teilchendurchmesser von 1 bis 5 nm werden z. B. von Cu, Pd und Pt erhalten. Größere Metallpartikel im Bereich von 10 bis 60 nm entstehen z.B. aus Ag, Co und Ni.

Bei Pd ist die Größe der Metallpartikel relativ unabhängig vom Füllfaktor (prozentualer Volumenanteil des Metalls im Komposit), während z. B. bei Ni eine gewisse Abhängigkeit der Teilchengröße vom Füllfaktor festgestellt wurde, wie aus der folgenden Tabelle I hervorgeht. Die hochdisperse und völlig homogene Verteilung der Metallpartikel in den erfindungsgemäßen Komposit-Materialien ermöglicht Metall-Beladungen der Oxidmatrix (Füllfaktoren) von z.B. 0,1 bis 30 Vol.%.

Wie ebenfalls aus Tabelle I ersichtlich ist, ist die Teilchengrößenverteilung der Metallpartikel sehr eng; der minimale und maximale Teilchendurchmesser unterscheiden sich um einen Faktor von höchstens etwa 2 bis 5.

Wie die zugehörigen graphischen Darstellungen in den Fig. 1 bis 10 zeigen, entspricht die Teilchengrößenverteilung der Metallpartikel annähernd einer Gauß-Verteilung.

Tabelle I

| Komposit-Material | Teilchengrößen-Verteilung (nm) | mittlerer Teilchendurchmesser (nm) | Füllfaktor (Vol.-%) | siehe Zeichnung |
|---|---|---|---|---|
| Ag • 4 $SiO_2$ | 9,0 - 30,9 | 19,5 | 7,2 | Fig. 2 |
| Co • $SiO_2$ | 11,0 - 24,9 | 17,4 | 17,5 | Fig. 3 |
| Cu • $SiO_2$ | 1,5 - 7,4 | 3,9 | 15,8 | Fig. 4 |
| Ni • $SiO_2$ | 37.5 - 62,4 | 50,3 | 15,7 | Fig. 5 |
| Ni • 15 $SiO_2$ | 11,0 - 28,9 | 19,5 | - | Fig. 6 |
| Ni • 30 $SiO_2$ | 2,5 - 12,4 | 5,9 | 0,1 | Fig. 7 |
| Pd • 2 $SiO_2$ | 1,8 - 4,2 | 3,0 | - | Fig. 8 |
| Pd • 15 $SiO_2$ | 2,8 - 5,2 | 3,8 | - | Fig. 9 |
| Pt • 32 $SiO_2$ | 0,8 - 4,2 | 2,5 | - | Fig. 10 |

Falls für bestimmte Anwendungen, z. B. als Dielektrika für den HF- und Mikrowellenbereich, größere Teilchengrößen der Metallpartikel wünschenswert sind, kann eine Temper- oder Sinterbehandlung des Komposit-Materials durchgeführt werden, um ein kontrolliertes Wachstum der Primärpartikel zu bewirken. Die Temperatur bei dieser Temper- oder Sinterbehandlung liegt im allgemeinen im Bereich von 500°C bis zu der Temperatur, bei der ein Dicht-Sintern der anorganischen Matrix erfolgt; d.h. etwa 1300°C im Falle von $SiO_2$. Ein bevorzugter Temperaturbereich ist 500 bis 1000°C. Mit Hilfe dieser Temper- oder Sinterbehandlung kann die mittlere Teilchengröße der Metallpartikel auf etwa 10 bis 500 nm, vorzugsweise 50 bis 300 nm, erhöht werden. Diese Temper- oder Sinterbehandlung kann vor oder nach dem Formen der Komposit-Materialien durchgeführt werden.

Die erfindungsgemäßen Komposit-Materialien lassen sich in der für keramische Materialien üblichen Weise weiterverarbeiten, z. B. zu elektrischen Elementen oder Formkörpern verpressen.

**Anwendung als Dielektrika**

Die erfindungsgemäßen Komposit-Materialien enthalten hochreine (Reinheit > 99%) Metallpartikel von definiert einstellbarer Größe und enger Teilchengrößenverteilung in homogener, hochdisperser Verteilung in einer isolierenden, vorzugsweise transparenten Oxidmatrix. Hierbei können die Größe der Metallpartikel und der Füllgrad über die Materialauswahl und die Verfahrensbedingungen systematisch variiert und somit hinsichtlich des SIMIT-Effektes optimiert werden.

Aufgrund dieser Eigenschaften stellen die Komposit-Materialien dielektrische Heterostrukturen dar, die hervorragend zur Verwendung als Dielektrika geeignet sind.

Spezielle Anwendungsbeispiele sind reflexionsarme, flächenhafte Absorber z. B. für HF- und Mikrowellen-Strahlung; Hochleistungs-Detektoren, mit denen z. B. Mikrowellenstrahlung hoher Feldstärke ohne dazwischengeschaltete Dämpfungsglieder direkt nachgewiesen werden kann; Abschlüsse und Sümpfe für die Mikrostreifenleitertechnik; und andere Bauelemente.

Aufgrund ihrer engen Teilchengrößenverteilung gestatten die Komposit-Materialien der Erfindung die Herstellung von Dielektrika mit erhöhter Selektivität und Präzision. Aus demselben Grund sind sie auch besser zur Miniaturisierung

geeignet; z. B. als Mikrobauteile in der HI-Schalttechnik.

Die Anwendung als HF- und Mikrowellen-Dielektrika wird auch dadurch begünstigt, daß die dielektrische Funktion (DF) durch Vorgabe von Teilchengröße und Füllfaktor maßgeschneidert werden kann. Hierbei werden im allgemeinen bei kleineren Metallpartikeln höhere Füllfaktoren angewandt.

Die Beziehung zwischen der effektiven dielektrischen Funktion $\bar{\varepsilon}$ und dem Füllfaktor f ist praktisch unabhängig vom jeweiligen Metall und ergibt sich annähernd aus folgender Gleichung:

$$\bar{\varepsilon}^{1/3} = f\varepsilon^{1/3} + (1\text{-}f)\varepsilon_M^{\ 1/3}$$

wobei $\bar{\varepsilon} = \varepsilon_{effektiv}$; f = Füllfaktor und $\varepsilon_M = \varepsilon_{Matrix}$

Die dielektrischen Eigenschaften der Metall-Komposite sind nahezu temperatur- und frequenzunabhängig. Weitere Vorteile der Komposite sind der sehr niedrige thermische Ausdehnungskoeffizient, die kleine reele dielektrische Funktion sowie ihre optische Transparenz.

Die folgenden Beispiele erläutern die Erfindung.

Es werden die folgenden Abkürzungen verwendet:

Tetraethoxysilan: TEOS
Acetylacetonat: acac
Acetat: OAc

**Herstellung von $(CH_3)_2N(CH_2)_3Si(OC_2H_5)_3$(A)**

Eine Lösung von 36,12 g (0,15 Mol) 3-Chlorpropyltriethoxysilan wird mit 27,05 g (0,6 Mol) Dimethylamin und 20 ml Petrolether versetzt und anschließend 12 Stunden im Autoklaven bei 30 bar und 150°C gerührt. Nach Abkühlen auf Raumtemperatur wird das gebildete Ammoniumsalz filtriert und mehrmals mit Petrolether gewaschen. Nach destillativem Abtrennen des Lösungsmittels bei Normaldruck wird die verbleibende farblose Flüssigkeit über eine Vigreux-Kolonne fraktioniert destilliert. Ausbeute: 11,58 g (31%); Sp. 100°C bei 8 Torr.

Auf ähnliche Weise oder nach dem Verfahren in U. Deschler et al., Angew. Chemie 98 (1986), 237, und J. L. Speier et al., J. Org. Chem. 36 (1971), 3120, werden die folgenden Verbindungen hergestellt:

$(C_2H_5)_2N(CH_2)_3Si(OC_2H_5)_3$ (B)

$(CH_3)_2NCH_2CH_2N(CH_3)(CH_2)_3Si(OC_2H_5)_3$ (C)

$H_2NCH_2CH_2NH(CH_2)_3Si(OCH_3)_3$ (D)

$H_2N(CH_3)_3Si(OCH_3)_3$ (E)

**Beispiel 1**

Eine Lösung 305 mg (1 mMol) von Palladium(II)-acetyl-acetonat ($Pd(acac)_2$) in 300 ml Ethanol wird unter kräftigem Rühren zuerst mit 520 mg (3 mMol) 3-Aminopropyltriethoxysilan (E), dann mit 6,71 ml (30 mMol) Tetraethoxysilan (TEOS) und dann mit 17,5 ml 0,2 n wäßriger $NH_3$-Lösung versetzt (die zugesetzte Ammoniak-Lösung enthält die 7,5-fache Wassermenge der zur vollständigen Hydrolyse aller Ethoxygruppen notwendigen Wassermenge).

Das Gemisch wird 72 Stunden bei 70°C in einem geschlossenen Gefäß gerührt. Anschließend überführt man das Gemisch in ein offenes Gefäß und läßt das Lösungsmittel bei Raumtemperatur verdunsten. Es verbleibt ein hellgelber, manchmal glasartiger Rückstand, aus dem sich mit Wasser und Ethanol keine Pd(II)-Ionen auswaschen lassen. Zur Vervollständigung der Polykondensation und Entfernung letzter Ethanol- und Wasser-Reste wird anschließend 6 Stunden bei 120°C getrocknet. Dann wird das Gel pulverisiert. Das so erhaltene Polykondensat erhält die Bezeichnung KA. Es enthält 4,2 % Pd.

Auf ähnliche Weise wurden die folgenden Polykondensate hergestellt:

| Ausgangsmaterialien | Polykondensat-Bezeichnung | Pd-Gehalt |
|---|---|---|
| 1 mMol Pd(acac)$_2$; 3 mMol (E); 150 mMol TEOS; 82,5 ml 0,2 N $NH_3$-Lösung | KB | 1,1% |
| 1 mMol Pd(acac)$_2$; 2 mMol (D); 70 mMol TEOS; 38,7 ml 0,2 N $NH_3$-Lösung | KC | 2,1% |
| 1 mMol Pd(acac)$_2$; 3 mMol (D), 8 mMol TEOS; 0,74 ml 0,2 N $NH_3$-Lösung | KD | 9,01% |

**Beispiel 2**

Wie in Beispiel 1 wurden jeweils 1 mMol einer der unten genannten Nickel-, Platin-, Eisen-, Kupfer- oder Silberverbindungen mit 3 mMol einer der Verbindungen (A) - (E) aus dem Herstellungsbeispiel, 8 mMol TEOS und 0,74 ml 0,2 N $NH_3$-Lösung umgesetzt. Man erhielt die folgenden Polykondensate:

| Polykondensat-Bezeichnung | Ausgangsverbindungen | Metallgehalt |
|---|---|---|
| KE | $NiCl_2 \cdot 6H_2O$, (D) | 6,03% |
| KF | $NiCl_2 \cdot 6H_2O$, (C) | 4,59% |
| KG | $NiCl_2 \cdot 6H_2O$, (B) | 5,91% |
| KH | $Ni(OAc)_2 \cdot 4H_2O$, (D) | 5,31% |
| KI | Pt(acac)$_2$, (D) | 15,01% |
| KJ | Pt(acac)$_2$, (B) | 16,84% |
| KK | $FeCl_2 \cdot 4H_2O$, (D) | 6,08% |
| KL | Fe(acac)$_3$, (D) | 4,09% |
| KM | $Fe(NO_3)_3$, (D) | 4,89% |
| KN | $CoCl_2 \cdot 6H_2O$, (D) | 5,99% |
| KO | $Co(OAc)_2 \cdot 4H_2O$, (D) | 6,01% |
| KP | $Cu(OAc)_2 \cdot H_2O$, (B) | 5,57% |
| KQ | $CuCl_2 \cdot 2H_2O$, (B) | 7,15% |
| KR | $Cu(OAc)_2 \cdot H_2O$, (D) | 6,68% |
| KS | $CuCl_2 \cdot 2H_2O$, (D) | 8,87% |
| KT | $AgNO_3$, (D) | 4,56% |

Außerdem wurden auf analoge Weise die folgenden Polykondensate mit sehr hohem Metallanteil hergestellt, wobei Metallverbindung : (B) oder (D) : TEOS im Verhältnis 1 : 2 : 1 umgesetzt wurden:

| Ausgangsverbindungen | Polykondensat-Bezeichnung |
|---|---|
| $Ni(OAc)_2 \cdot H_2O$, (D) | KH' |
| $Pt(acac)_2$, (B) | KJ' |
| $Fe(acac)_3$, (D) | KL' |
| $Co(OAc)_2 \cdot 4H_2O$, (D) | KO' |
| $Cu(OAc)_2 \cdot H_2O$, (B) | KP' |
| $Pd(acac)_2$, (D) | KD' |

**Beispiel 3**

Zu einer Lösung von 225 mg (0,5 mmol) $Na_2[PtCl_6]$ in 15 ml Ethanol bei 0°C werden 250 mg (1,0 mmol) der Verbindung (C) getropft, und anschließend hält man 2 Stunden bei 65°C. Die Lösung trübt sich durch etwas ausgefallenes Polykondensat. Nach Abtrennen des Niederschlags kann aus der klaren, gelben Lösung bei Raumtemperatur ein feinkristalliner Niederschlag von $Pt[(CH_3)_2N(CH_2)_2N(CH_3)\text{-}(CH_2)_3\text{-}Si(OC_2H_5)_3]Cl_2$ erhalten werden. Dieser Platin-Komplex hat den Fp. 116°C (Zersetzung).

**Beispiel 4**

Zur Oxidation der organischen Bestandteile der Polykondensate KA, KB, KC und KD aus Beispiel 1 wird 1 bis 2 Stunden lang ein trockener Luftstrom bei einer Temperatur von 500°C über das pulverisierte Gel geleitet (Luftstrom 100 ml/min). Es resultiert ein braunes Pulver der Zusammensetzung $PdO \cdot xSiO_2$, wobei x gemäß der Zusammensetzung von KA, KB, KC und KD die Werte 33, 153, 72 und 11 annimmt.

Man erhielt auf diese Weise die folgenden PdO-Komposit-Materialien:

**Aus KA hergestelltes PdO-Komposit:**

Oxidation 2 Stunden bei 500°;
Elementaranalyse: C 0,2, N 0,0, Pd 4,5%;
BET-Oberfläche 470 $m^2/g$;
spezifisches Porenvolumen 1,57 $cm^3/g$.

**Aus KB hergestelltes PdO-Komposit:**

Oxidation 1 Stunde bei 500°;
Elementaranalyse: C 0,4, N 0,0, Pd 1,1%;
BET-Oberfläche 229 $m^2/g$;
spezifisches Porenvolumen 0,32 $cm^3/g$.

**Aus KC hergestelltes PdO-Komposit:**

Oxidation 2 Stunden bei 500°;
Elementaranalyse: C 0,2, N 0,0, Pd 2,3%;
BET-Oberfläche 354 $m^2/g$;
spezifisches Porenvolumen 2,30 $cm^3/g$.

**Beispiel 5**

Die Oxidation der Polykondensate aus Beispiel 2 wurde durch 5stündiges Erhitzen bei 500°C im Preßluftstrom erreicht. Bei den aus den Polykondensaten KH', KL', KP' und KD' gewonnenen Metalloxid-Kompositen konnten die folgenden Metalloxide röntgenographisch nachgewiesen werden:

Ausgangsmaterial

| | | | |
|---|---|---|---|
| NiO | kubisch | graphitgraue Farbe | KH' |
| $\alpha$ $Fe_2O_3$ | trigonal | rotbraune Farbe | KL' |
| CuO | monoklin | grüngraue Farbe | KP' |
| PdO | tetragonal | dunkelblaue Farbe | KD' |

Das Kobaltoxid-haltige Komposit war röntgenamorph (Farbe: stahlblau).

Unter den oben genannten Bedingungen kann aus den Platinhaltigen Polykondensaten KI und KJ kein Platinoxidhaltiges Komposit gewonnen werden; entstehendes Platinoxid zersetzt sich bei dieser Temperatur in elementares Platin und Sauerstoff. Man erhält also ohne Reduktion ein Platinmetall-haltiges Komposit.

Die Analysenwerte des Polykondensats KP aus Beispiel 2 nach der Oxidation waren: N 0,0%, C 0,0%, H 0,23%. Die Oxidation der organischen Bestandteile verlief also vollständig.

**Beispiel 6**

Zur Reduktion der Palladiumoxid-Partikel der PdO-Komposite, die aus den Polykondensaten KA, KB und KC aus Beispiel 1 hergestellt worden sind, wird Wasserstoff 2 Stunden bei Raumtemperatur über das Palladiumoxid-haltige Material geleitet. Man erhält ein graues Pulver der Zusammensetzung $Pd \cdot xSiO_2$, wobei x die gleichen Werte wie in Beispiel 4 hat.

Die einzelnen Palladium-Partikel enthaltenden Komposit-Materialien sind wie folgt charakterisiert (für die Bedeutung von KA, KB und KC siehe Beispiel 1):

**Aus KA hergestelltes Pd-Komposit:**

Elementaranalyse: C 0,4, N 0,0, Pd 4,6%;
BET-Oberfläche 469 $m^2/g$;
spezifisches Porenvolumen 1,77 $cm^3/g$.
Mittlerer Pd-Partikel-Durchmesser: 2,3 nm, Verteilung 1,25-3,75 nm, siehe Fig. 1.

**Aus KB hergestelltes Pd-Komposit:**

Elementaranalyse: C 0,5, N 0,0, Pd 1,1%;
BET-Oberfläche 206 $m^2/g$;
spezifisches Porenvolumen 0,32 $cm^3/g$;
Mittlerer Pd-Partikel-Durchmesser: 2,1 nm, Verteilung 0,75-3,75 nm, ähnlich wie in Fig. 1.

**Aus KC hergestelltes Pd-Komposit**:

Elementaranalyse: C 0,4, N 0,0, Pd 2,4%;
BET-Oberfläche 342 $m^2/g$;
spezifisches Porenvolumen 1,98 $cm^3/g$;
Mittlerer Pd-Partikel-Durchmesser: 2,0 nm, Verteilung 0.75-3,75 nm, ähnlich wie in Fig. 1.

**Beispiel 7**

Die in Beispiel 6 beschriebene Reduktion der aus den in Beispiel 1 beschriebenen Polykondensate KA, KB und KC hergestellten PdO-Komposite zu Pd-Kompositen wurde mit Kohlenmonoxid anstelle von Wasserstoff 2 Stunden bei 200°C durchgeführt. Man erhielt dabei die gleichen Produkte wie in Beispiel 6.

**Beispiel 8**

Die Reduktion der Metalloxid-haltigen Komposit-Materialien aus Beispiel 5 erfolgte 5 Stunden lang im $H_2$-Strom bei

400°C. Das Palladiumoxid-haltige Komposit ließ sich bei Raumtemperatur reduzieren. Die Metall-haltigen Komposit-Materialien hatten nach der Reduktion folgende Farbe:

Eisen-haltiges Komposit: braunschwarz,
Nickel-haltiges Komposit: schwarz
Palladium-haltiges Komposit: braunschwarz
Kupfer-haltiges Komposit: braunschwarz
Kobalt-haltiges Komposit: stahlblau.

**Beispiel 9**

Die folgende allgemeine Verfahrensvorschrift bezieht sich auf das Reaktionsschema:

$$\underset{\mathbf{3}}{L_nM[X(CH_2)_3Si(OR)_3]_y} + x\ Si(OEt)_4 \xrightarrow[(i)]{NH_3/H_2O}$$

$$\longrightarrow \underset{\mathbf{4}}{L_nM(XCH_2CH_2SiO_{3/2})_y} \cdot x\ SiO_2 \xrightarrow[(ii)]{}$$

$$\longrightarrow \underset{\mathbf{5}}{MO_m \cdot (x+y)\ SiO_2} \xrightarrow[(iii)]{} \underset{\mathbf{6}}{M \cdot (x+y)\ SiO_2}$$

das drei Schritte umfaßt: (i) die Sol-Gel-Polykondensation der Metallkomplexe **3**; (ii) die Oxidation der entstehenden Polykondensate **4** unter Entfernung aller organischen Bestandteile und Bildung der Metalloxid-Komposite **5** ;und (iii) die Reduktion der Metalloxid-Komposite **5** zu den Metall-Kompositen **6**.

Zu einer Suspension des entsprechenden Metallsalzes in Ethanol (2,5 ml Ethanol pro 0,1 mMol Metallsalz für Reaktionen ohne TEOS; 10 ml Ethanol pro 0,1 mMol Metallsalz für Reaktionen mit TEOS) wird die in Tabelle III angegebene Menge der bifunktionellen Verbindung **7** gegeben: $X(CH_2)_3Si(OC_2H_5)_3$ (**7a**: X = $H_2NCH_2CH_2NH$; **7b**: X = $NH_2$; **7c**: X = CN). Die Mischung wird bei Raumtemperatur gerührt, bis eine klare Lösung erhalten wird (etwa 1 h). Nach Zusatz der in Tabelle III genannten Menge TEOS wird die berechnete Menge wäßriges 0,2 n Ammoniak zugegeben, entsprechend einem 7,5-fachen Überschuß Wasser (bezogen auf die zur Hydrolyse aller Si-OR-Gruppen erforderliche Wassermenge; d.h. 7,5 (4x + 3y) mMol $H_2O$ pro mMol Metall).

Das erhaltene homogene Gemisch, das die typische Farbe der entsprechenden Metallkomplexe **3** zeigt, wird in einem geschlossenen Gefäß 72 h auf 70°C erhitzt. Hierauf wird das Lösungsmittel bei 60°C/12 Torr abgezogen. Die erhaltenen festen, chemisch homogenen Xerogele **4a-s** werden bei 70°C/$10^{-3}$ Torr getrocknet, um adsorbiertes Wasser und Alkohol zu entfernen. Die Elementaranalyse der Polykondensate ist in Tabelle IV genannt.

Tabelle II

| | $LnM[X(CH_2)_3SiO_{3/2}]_y \cdot xSiO_2$ **4** | $MO_m \cdot (x+y)SiO_2$ **5** | $M \cdot (x+y)SiO_2$ **6** |
|---|---|---|---|
| **a** | $Ag(NO_3) \cdot 2NC\text{-}Y \cdot 2\ SiO_2$ | $Ag_2O \cdot 8\ SiO_2$ | $Ag \cdot 4\ SiO_2$ |
| **b** | $Ag(OAc) \cdot 2H_2N\text{-}Y \cdot 10\ SiO_2$ | $Ag_2O \cdot 24\ SiO_2$ | $Ag \cdot 12\ SiO_2$ |
| **c** | $Cd(NO_3)_2 \cdot 2H_2NCH_2CH_2NH\text{-}Y \cdot 10\ SiO_2$ | $CdO \cdot 12\ SiO_2$ | - |
| **d** | $Co(OAc)_2 \cdot H_2NCH_2CH_2NH\text{-}Y$ | $CoO \cdot SiO_2$ | $Co \cdot SiO_2$ |
| **e** | $Cu(OAc)_2 \cdot H_2NCH_2CH_2NH\text{-}Y$ | $CuO \cdot SiO_2$ | $Cu \cdot SiO_2$ |
| **f** | $Ni(OAc)_2 \cdot H_2NCH_2CH_2NH\text{-}Y$ | $NiO \cdot SiO_2$ | $Ni \cdot SiO_2$ |
| **g** | $Ni(OAc)_2 \cdot 2\ H_2NCH_2CH_2NH\text{-}Y$ | $NiO \cdot 2\ SiO_2$ | $Ni \cdot 2\ SiO_2$ |
| **h** | $Ni(OAc)_2 \cdot 3\ H_2NCH_2CH_2NH\text{-}Y$ | $NiO \cdot 3\ SiO_2$ | $Ni \cdot 3\ SiO_2$ |
| **i** | $Ni(OAc)_2 \cdot 3\ H_2NCH_2CH_2NH\text{-}Y \cdot 2.5\ SiO_2$ | $NiO \cdot 5.5\ SiO_2$ | $Ni \cdot 5.5\ SiO_2$ |
| **j** | $Ni(OAc)_2 \cdot 3\ H_2NCH_2CH_2NH\text{-}Y \cdot 10\ SiO_2$ | $NiO \cdot 13\ SiO_2$ | $Ni \cdot 10\ SiO_2$ |
| **k** | $Ni(OAc)_2 \cdot 3\ H_2NCH_2CH_2NH\text{-}Y \cdot 30\ SiO_2$ | $NiO \cdot 33\ SiO_2$ | $Ni \cdot 30\ SiO_2$ |
| **l** | $Pd(acac)_2 \cdot 2\ H_2NCH_2CH_2NH\text{-}Y$ | $PdO \cdot 2\ SiO_2$ | $Pd \cdot 2\ SiO_2$ |
| **m** | $Pd(acac)_2 \cdot 2\ H_2NCH_2CH_2NH\text{-}Y \cdot 2.5\ SiO_2$ | $PdO \cdot 4.5\ SiO_2$ | $Pd \cdot 4.5\ SiO_2$ |
| **n** | $Pd(acac)_2 \cdot 2\ H_2NCH_2CH_2NH\text{-}Y \cdot 5\ SiO_2$ | $PdO \cdot 7\ SiO_2$ | $Pd \cdot 7\ SiO_2$ |
| **o** | $Pd(acac)_2 \cdot 2\ H_2NCH_2CH_2NH\text{-}Y \cdot 10\ SiO_2$ | $PdO \cdot 12\ SiO_2$ | $Pd \cdot 12\ SiO_2$ |
| **p** | $Pd(acac)_2 \cdot 2\ H_2NCH_2CH_2NH\text{-}Y \cdot 20\ SiO_2$ | $PdO \cdot 22\ SiO_2$ | $Pd \cdot 22\ SiO_2$ |
| **q** | $Pd(acac)_2 \cdot 2\ H_2NCH_2CH_2NH\text{-}Y \cdot 30\ SiO_2$ | $PdO \cdot 32\ SiO_2$ | $Pd \cdot 32\ SiO_2$ |
| **r** | $Pd(acac)_2 \cdot 5\ H_2NCH_2CH_2NH\text{-}Y \cdot 10\ SiO_2$ | $PdO \cdot 15\ SiO_2$ | $Pd \cdot 15\ SiO_2$ |
| **s** | $Pt(acac)_2 \cdot 2\ H_2NCH_2CH_2NH\text{-}Y \cdot 30\ SiO_2$ | $PtO \cdot 32\ SiO_2$ | $Pt \cdot 32\ SiO_2$ |
| $[Y = (CH_2)_3SiO_{3/2}]$ | | | |

Die Polykondensate **4** werden in ein horizontales Quarzrohr eingebracht und in einem Ofen unter den in Tabelle V genannten Bedingungen erhitzt. Während des Erhitzens wird ein Strom von 200 ml/min trockener Luft durchgeleitet. Die Elementaranalysen der erhaltenen Metalloxid-Komposite **5** sind in Tabelle VI genannt.

Die Metalloxid-Komposite **5** werden in ein horizontales Quarzrohr eingebracht und in einem Ofen unter den in Tabelle VI genannten Bedingungen reduziert. Während des Erhitzens wird ein Strom von 200 ml/min Wasserstoff durchgeleitet. Die Elementaranalysen der erhaltenen Metall-Komposite **6** sind in Tabelle VII; die Teilchengrößen-Verteilung in Tabelle VIII genannt.

Tabelle III

| Mengenverhältnisse bei der Polykondensation | | | | | | | | |
|---|---|---|---|---|---|---|---|---|
| | Metallsalz | | bifunktion. Verbindg. | | TEOS | | 0.2 n $NH_3$ | |
| | g | (mmol) | g | (mmol) | g | (mmol) | ml | (mmol) |
| **4a** | 3.40 | (20.0) | 9.60 | (40.0) | 8.91 | (40.0) | 37.80 | (2.1) |
| **4b** | 0.67 | (4.0) | 1.84 | (8.0) | 8.91 | (40.0) | 24.80 | (1.4) |
| **4c** | 1.23 | (8.0) | 2.24 | (8.0) | 8.91 | (40.0) | 24.80 | (1.4) |
| **4d** | 4.98 | (20.0) | 5.60 | (20.0) | - | | 8.10 | (0.45) |
| **4e** | 3.99 | (20.0) | 5.60 | (20.0) | - | | 8.10 | (0.45) |
| **4f** | 4.98 | (20.0) | 5.60 | (20.0) | - | | 8.10 | (0.45) |
| **4g** | 4.98 | (20.0) | 11.20 | (40.0) | - | | 16.20 | (0.9) |
| **4h** | 4.98 | (20.0) | 16.80 | (60.0) | - | | 24.30 | (1.35) |
| **4i** | 1.25 | (5.0) | 4.20 | (15.0) | 2.78 | (13.0) | 12.80 | (0.7) |
| **4j** | 1.25 | (5.0) | 4.20 | (15.0) | 11.12 | (50.0) | 33.08 | (1.8) |
| **4k** | 0.50 | (2.0) | 1.68 | (6.0) | 13.40 | (60.0) | 34.80 | (1.9) |
| **4l** | 1.52 | (5.0) | 2.80 | (10.0) | - | | 4.05 | (0.2) |
| **4m** | 0.91 | (3.0) | 1.68 | (6.0) | 1.67 | (7.5) | 6.48 | (0.4) |
| **4n** | 0.61 | (2.0) | 1.12 | (4.0) | 2.23 | (10.0) | 7.02 | (0.4) |
| **4o** | 0.46 | (1.5) | 0.84 | (3.0) | 3.34 | (15.0) | 9.32 | (0.5) |
| **4p** | 0.30 | (1.0) | 0.56 | (2.0) | 4.45 | (20.0) | 11.61 | (0.65) |
| **4q** | 0.16 | (0.5) | 0.28 | (1.0) | 3.34 | (15.0) | 8.50 | (0.5) |
| **4r** | 1.22 | (4.0) | 5.60 | (20.00 | 8.32 | (40.0) | 29.70 | (1.65) |
| **4s** | 0.98 | (2.5) | 1.40 | (5.0) | 16.70 | (75.0) | 42.50 | (2.4) |

Tabelle IV

| Elementaranalyse der Polykondensate * | | | | | | | | |
|---|---|---|---|---|---|---|---|---|
| | C | | H | | N | | Metall | |
| **4a** | 16.38 | (17.46) | 2.45 | (2.18) | 7.37 | (7.63) | 20.65 | (19.62) |
| **4b** | 10.37 | (9.73) | 2.22 | (1.93) | 3.67 | (2.84) | 11.86 | (10.93) |
| **4c** | 10.92 | (10.50) | 3.08 | (2.28) | 4.99 | (4.90) | 7.57 | (9.84) |
| **4d** | 32.83 | (32.72) | 5.53 | (5.76) | 8.53 | (8.48) | 16.06 | (17.84) |
| **4e** | 31.99 | (32.27) | 5.78 | (5.68) | 8.05 | (8.37) | 17.60 | (18.99) |
| **4f** | 31.04 | (32.74) | 6.38 | (5.76) | 7.76 | (8.49) | 15.80 | (17.79) |
| **4g** | 35.41 | (34.79) | 7.52 | (6.63) | 11.25 | (11.60) | 10.66 | (12.16) |
| **4h** | 34.35 | (35.85) | 7.85 | (7.08) | 12.72 | (13.21) | 8.50 | (9.23) |
| **4i** | 26.97 | (29.01) | 6.37 | (5.73) | 10.39 | (10.69) | 7.22 | (7.47) |
| **4j** | 18.73 | (18.45) | 3.86 | (3.64) | 6.79 | (6.80) | 4.29 | (4.75) |
| **4k** | 10.04 | (9.36) | 2.41 | (1.85) | 3.52 | (3.45) | 2.13 | (2.40) |
| **4l** | 32.32 | (39.32) | 6.73 | (6.55) | 9.58 | (9.17) | 19.61 | (17.43) |
| **4m** | 28.06 | (31.56) | 5.55 | (5.26) | 8.10 | (7.36) | 14.31 | (13.99) |
| **4n** | 26.32 | (26.36) | 4.51 | (4.39) | 6.35 | (6.15) | 11.76 | (11.69) |
| **4o** | 18.30 | (19.83) | 3.69 | (3.30) | 5.58 | (4.63) | 8.33 | (8.79) |
| **4p** | 12.56 | (13.26) | 2.79 | (2.21) | 3.83 | (3.09) | 5.35 | (5.88) |
| **4q** | 10.78 | (9.96) | 2.41 | (1.66) | 2.75 | (2.32) | 4.48 | (4.41) |
| **4r** | 18.76 | (20.85) | 4.96 | (4.73) | 8.20 | (8.39) | 5.72 | (6.37) |
| **4s** | 10.61 | (9.60) | 2.28 | (1.60) | 1.96 | (2.24) | 6.37 | (7.81) |

* Die berechneten Werte (in Klammern)entsprechen der idealen Formel-Zusammensetzung

Tabelle V

| Reaktionsbedingungen für die Oxidation und Reduktion | | | |
|---|---|---|---|
| | **Oxidation** | | **Reduktion** |
| **5a** | 400°C / 20 min[a)] | **6a** | 500°C / 2 h |
| **5b** | 500°C / 30 min[a)] | **6b** | 500°C / 2 h |
| **5c** | 550°C / 50 min[a)] | | |
| **5d** | 500°C / 30 min[a)] | **6d** | 500°C / 2 h |
| **5e** | 400°C / 30 min[a)] | **6e** | 500°C / 2 h |
| **5f** | 500°C / 30 min[a)] | **6f** | 500°C / 2 h |
| | | **6f'** | 900°C / 4 h |
| **5g** | 500°C / 30 min | **6g** | 900°C / 2 h |
| **5h** | 500°C / 30 min | **6h** | 900°C / 2 h |
| **5i** | 550°C / 30 min | **6i** | 900°C / 2 h |
| **5j** | 550°C / 30 min | **6j** | 900°C / 2 h |
| **5k** | 550°C / 30 min | **6k** | 900°C / 2 h |
| **5l** | 400°C / 20 min[a)] | **6l** | 25°C / 1 h |
| **5m** | 550°C / 30 min | **6m** | 25°C / 1 h |
| **5n** | 550°C / 30 min | **6n** | 25°C / 1 h |
| **5o** | 550°C / 30 min | **6o** | 25°C / 1 h |
| **5p** | 550°C / 30 min | **6p** | 25°C / 1 h |
| **5q** | 550°C / 30 min[a)] | **6q** | 25°C / 1 h |
| **5r** | 550°C / 30 min | **6r** | 500°C / 1 h |
| **5s** | 500°C / 30 min | **6s** | 500°C / 1 h |

[a)] Optimiert durch TGA

Tabelle VI

| Elementaranalyse der Metalloxid/$SiO_2$-Komposite * | | | | | |
|---|---|---|---|---|---|
| | **C**(gef.) | **H** (gef.) | **N**(gef.) | Metall gef. (ber.) | |
| **5a** | 0.54 | 0.25 | 0.00 | 28.50 | (30.32) |
| **5b** | 1.29 | 0.42 | 0.12 | 14.95 | (12.91) |
| **5c** | 1.19 | 0.58 | 0.63 | 9.53 | (13.28) |
| **5d** | 0.00 | 0.00 | 0.00 | 42.33 | (43.66) |
| **5e** | 0.00 | 0.19 | 0.00 | 40.45 | (45.52) |
| **5f** | 0.23 | 0.46 | 0.00 | 36.84 | (43.57) |
| **5g** | 0.31 | 0.95 | 0.00 | 24.82 | (30.15) |
| **5h** | 0.49 | 0.44 | 0.09 | 17.77 | (23.05) |
| **5i** | 0.23 | 0.54 | 0.27 | 13.29 | (14.48) |
| **5j** | 0.29 | 0.32 | 0.26 | 6.54 | (6.87) |
| **5k** | 0.59 | 0.59 | 0.23 | 2.71 | (2.86) |
| **5l** | 0.18 | 0.12 | 0.00 | 40.49 | (43.89) |
| **5m** | 0.77 | 0.29 | 0.32 | 25.37 | (27.09) |
| **5n** | 1.08 | 0.36 | 0.34 | 17.70 | (19.60) |
| **5o** | 0.45 | 0.31 | 0.38 | 11.68 | (12.62) |
| **5p** | 0.23 | 0.52 | 0.27 | 6.84 | (7.37) |
| **5q** | 0.57 | 0.52 | 0.40 | 4.93 | (5.21) |
| **5r** | 0.15 | 0.57 | 0.00 | 8.57 | (10.41) |
| **5s** | 0.34 | 0.96 | 0.00 | 8.37 | (9.16) |

* Der berechnete Metallgehalt entspricht der idealen Formel-Zusammensetzung. Die theoretischen Werte für C, H und N sind Null.

Tabelle VII

| Elementaranalyse der Metall/$SiO_2$-Komposite * | | | | | |
|---|---|---|---|---|---|
| | **C** (gef.) | **H** (gef.) | **N** (gef.) | Metall gef. (ber.) | |
| **6a** | 0.14 | 0.18 | 0.00 | 28.70 | (31.01) |
| **6b** | 1.18 | 0.32 | 0.10 | 10.22 | (13.03) |
| **6d** | 0.07 | 0.00 | 0.00 | 47.51 | (49.54) |
| **6e** | 0.11 | 0.00 | 0.00 | 46.17 | (51.42) |
| **6f** | 0.22 | 0.48 | 0.00 | 43.70 | (49.44) |
| **6f'** | 0.26 | 0.30 | 0.00 | 43.95 | (49.44) |
| **6g** | 0.28 | 0.04 | 0.19 | 31.08 | (32.85) |
| **6h** | 0.72 | 0.00 | 0.00 | 20.05 | (24.59) |
| **6i** | 0.29 | 0.00 | 0.19 | 14.01 | (15.08) |
| **6j** | 0.25 | 0.06 | 0.15 | 6.99 | (7.00) |
| **6k** | 0.77 | 0.00 | 0.20 | 2.65 | (2.88) |
| **6l** | 0.10 | 0.26 | 0.00 | 44.81 | (47.00) |
| **6m** | 0.30 | 0.34 | 0.30 | 26.03 | (28.24) |
| **6n** | 0.51 | 0.45 | 0.35 | 18.12 | (20.20) |
| **6o** | 0.22 | 0.35 | 0.33 | 10.84 | (12.87) |
| **6p** | 0.29 | 0.56 | 0.26 | 7.18 | (7.46) |
| **6q** | 0.53 | 0.60 | 0.33 | 5.52 | (5.25) |
| **6r** | 0.08 | 0.22 | 0.00 | 9.36 | (10.57) |
| **6s** | 0.22 | 0.40 | 0.00 | 7.93 | (9.23) |

* Der berechnete Metallgehalt entspricht der idealen Formel-Zusammensetzung. Die theoretischen Werte für C, H und N sind Null.

Tabelle VIII

| Größe der Metalloxid- und Metallpartikel | | |
|---|---|---|
| | Minimale und maximale Teilchendurchmesser [nm] | mittlerer Teilchendurchmesser [nm] |
| **5f** | 22.5 - 47.4 | 34.8 |
| **5k** | 0.3 - 2.7 | 1.4 |
| **6a** | 9.0 - 30.9 | 19.5 |
| **6d** | 11.0 - 24.9 | 17.4 |
| **6e** | 1.5 - 7.4 | 3.9 |
| **6f** | 37.5 - 62.4 | 50.3 |
| **6f'** | 32.5 -102.4 | 57 |
| **6g**[a)] | 7.5 - 12.4, 27.5 - 72.4 | |
| **6h**[a)] | 2.5 - 22.4, 62.5 -102.4 | |
| **6i**[a)] | 2.5 - 12.4, 32.5 - 57.4 | |
| **6j** | 12.5 - 47.4 | 22.9 |
| **6k** | 2.5 - 12.4 | 5.9 |
| **6l** | 1.8 - 4.2 | 3.0 |
| **6n** | 1.8 - 4.2 | 2.8 |
| **6q** | 1.3 - 3.7 | 2.4 |
| **6r** | 2.8 - 5.2 | 3.8 |
| **6s** | 0.8 - 4.2 | 2.5 |

[a)] bimodale Teilchengrößenverteilung

## Patentansprüche

1. Verwendung von Komposit-Materialien, die Metall-Partikel mit einer mittleren Teilchengröße von 0,2 bis 500 nm in einer isolierenden Oxidmatrix homogen dispergiert enthalten und dadurch erhältlich sind, daß man

   a) in einem flüssigen Reaktionsmedium (1) eine oder mehrere Metallverbindungen und (2) eine oder mehrere bifunktionelle Verbindungen, die mindestens eine zur Komplexierung des Metalls befähigte Gruppe und mindestens eine bei der Polykondensation ein anorganisches Netzwerk bildende Gruppe aufweisen, sowie gegebenenfalls (3) einen oder mehrere zur Polykondensation befähigte Netzwerkbildner, wobei die Verbindungen (1), (2) und (3) im Reaktionsmedium löslich sind, den Bedingungen einer Komplexbildungsreaktion und hydrolytischen Polykondensation nach dem Sol-Gel-Prozeß unterwirft,

   b) das erhaltene Polykondensat zur Bildung eines Komposit-Materials, das kleine Metall- und/oder Metalloxid-Partikel in der Oxidmatrix enthält, oxidiert und gegebenenfalls

   c) die vorhandenen Metalloxid-Partikel zum Metall reduziert,

   als Dielektrika.

2. Verwendung nach Anspruch 1, dadurch gekennzeichnet, daß eine im Reaktionsmedium lösliche Metallverbindung der allgemeinen Formel I eingesetzt worden ist:

$$M_iX_mY_n \quad (I)$$

in der M ein neutrales oder positiv geladenes Metallatom ist, X ein Anion ist, Y ein neutraler Ligand ist, i eine ganze Zahl mit einem Wert ≥ 1 ist, m und n den Wert Null haben oder ganze Zahlen mit einem Wert ≥ 1 sind, wobei (m+n) einen zum Ladungsausgleich und zur koordinativen Absättigung von $M_i$ ausreichenden Wert hat.

**3.** Verwendung nach Anspruch 1 oder 2, dadurch gekennzeichnet, daß eine im Reaktionsmedium lösliche bifunktionelle Verbindung der allgemeinen Formel II eingesetzt worden ist:

$$A_gz[ER_oR'_p]_h \quad (II)$$

in der A eine zur Komplexierung des Metalls der Metallverbindung (1) befähigte Gruppe ist, z eine hydrolysestabile Brückengruppe ist, $[ER_oR'_p]$ eine Gruppe ist, die bei der Polykondensation ein anorganisches Netzwerk ausbildet, g, h und o ganze Zahlen mit einem Wert > 0 sind, p den Wert Null hat oder eine ganze Zahl mit einem Wert ≥ 1 ist, wobei (o + p) einen zum Ladungsausgleich mit E ausreichenden Wert hat.

**4.** Verwendung nach einem der Ansprüche 1 bis 3, dadurch gekennzeichnet, daß ein im Reaktionsmedium löslicher Netzwerkbildner der allgemeinen Formel III eingesetzt worden ist:

$$ER_qR'_r \quad (III)$$

in der E ein anorganische Netzwerke bildendes Element ist, das vorzugsweise ausgewählt ist unter Silicium, Aluminium, Titan, Zirkonium, Zinn, Germanium, Bor, Phosphor und Arsen, R ein hydrolysierbarer Rest und R' ein nichthydrolysierbarer Rest ist, q eine ganze Zahl mit einem Wert ≥ 2 ist, r den Wert Null hat oder eine ganze Zahl mit einem Wert ≥ 1 ist, wobei dei Summe (q + r) einen zum Ladungsausgleich mit E ausreichenden Wert hat.

**5.** Verwendung nach einem der Ansprüche 1 bis 4, dadurch gekennzeichnet, daß die Metallverbindung (1) und die bifunktionelle Verbindung (2) mindestens in einem Molverhältnis, das zur koordinativen Absättigung des Metalls M ausreicht, vorzugsweise in einem Molverhältnis (1):(2) von 1:1 bis 1:20 oder darüber eingesetzt worden ist.

**6.** Verwendung nach einem der Ansprüche 1 bis 5, dadurch gekennzeichnet, daß die bifunktionelle Verbindung (2) und der Netzwerkbildner (3) in einem Molverhältnis (2):(3) von 1:5 bis 1:300 oder darüber eingesetzt worden sind.

**7.** Verwendung nach einem der Ansprüche 1 bis 6, dadurch gekennzeichnet, daß die Reaktion in Stufe a) entweder einstufig durchgeführt oder zunächst die Komplexbildungsreaktion in einem wasserfreien Reaktionsmedium durchgeführt, gegebenenfalls der entstandene Metallkomplex isoliert, und dann die hydrolytische Polykondensation nach dem Sol-Gel-Prozeß durchgeführt worden sind.

**8.** Verwendung nach einem der Ansprüche 1 bis 7, dadurch gekennzeichnet, daß die Oxidation in Stufe b) naßchemisch mit einem geeigneten Oxidationsmittel und/oder durch Calcinierung des Polykondensats in Sauerstoff-haltiger Atmosphäre durchgeführt worden sind.

**9.** Verwendung nach einem der Ansprüche 1 bis 8, dadurch gekennzeichnet, daß die Reduktion in Stufe c) mit einem flüssigen oder gasförmigen Reduktionsmittel, vorzugsweise bei Temperaturen von Raumtemperatur bis 500°C, durchgeführt worden ist.

**10.** Verwendung nach einem der Ansprüche 1 bis 9, dadurch gekennzeichnet, daß anschließend eine Temper- oder Sinterbehandlung durchgeführt worden ist, um die Teilchengröße der Metall-Partikel zu erhöhen.

**11.** Verwendung nach einem der Ansprüche 1 bis 10, dadurch gekennzeichnet, daß die Metallpartikel eine mittlere Teilchengröße von 1 bis 300 nm haben.

**12.** Verwendung nach Anspruch 11, dadurch gekennzeichnet, daß die Teilchengrößen-Verteilung annähernd einer Gauß-Verteilung entspricht, wobei der minimale Durchmesser und der maximale Durchmesser einer Verteilung um den Faktor 2 bis 5 verschieden sind.

**13.** Verwendung der Dielektrika nach einem der Ansprüche 1 bis 12 zur Herstellung von elektrischen Apparaten.

**14.** Verwendung der Dielektrika nach einem der Ansprüche 1 bis 12 zur Herstellung von reflexionsarmen Absorbern

für HF- und Mikrowellenstrahlung.

**15.** Verwendung der Dielektrika nach einem der Ansprüche 1 bis 12 zur Herstellung von Bauelementen, insbesondere Abschlüssen und Sümpfen für die Mikrostreifenleitertechnik.

**16.** Verwendung der Dielektrika nach einem der Ansprüche 1 bis 12 zur Herstellung von Hochleistungs-Detektoren.

## Claims

**1.** Use as dielectrics of composite materials which contain metal particles with a mean particle size of 0.2 to 500 nm homogeneously dispersed in an insulating oxide matrix and which are obtainable in that

a) (1) one or more metal compounds and (2) one or more bi-functional compounds which have at least one group capable of complexing the metal and at least one group forming an inorganic network in the poly-condensation, and optionally (3) one or more network formers capable of the poly-condensation, are subjected in a liquid reaction medium wherein the compounds (1), (2) and (3) are soluble to the conditions of a complex forming reaction and hydrolytic poly-condensation according to the sol-gel process,
b) the poly-condensate which is obtained is oxidised to form a composite material which contains small metal and/or metal oxide particles in the oxide matrix and optionally
c) the metal oxide particles present are reduced to the metal.

**2.** Use according to claim 1, characterized in that a metal compound soluble in the reaction medium has been used with the general formula I:

$$M_iX_mY_n \quad (I)$$

in which M is a neutral or positively charged metal atom, X is an anion, Y is a neutral ligand, i is a whole number with a value $\geq 1$, m and n have the value zero or are whole numbers with a value $\geq 1$, where (m + n) has a value sufficient for charge compensation and for coordinate saturation of $M_i$.

**3.** Use according to claim 1 or 2, characterized in that a bi-functional compound soluble in the reaction medium has been used with the general formula II:

$$A_gz[ER_oR'_p]_h \quad (II)$$

in which A is a group capable of complexing the metal of the metal compound (1), z is a hydrolysis-stable bridging group, $[ER_oR'_p]$ is a group which forms an inorganic network in the poly-condensation, g, h and o are whole numbers with a > 0, p has the value zero or is a whole number with a value $\geq 1$, where (o + p) has a value sufficient for charge compensation with E.

**4.** Use according to any of claims 1 to 3, characterized in that a network former soluble in the reaction medium has been used with the general formula III:

$$Er_qR'_r \quad (III)$$

in which E is an element forming an inorganic network, which is preferably selected from silicon, aluminium, titanium, zirconium, tin, germanium, boron, phosphorus and arsenic, R is a hydrolizable residue and R' is a non-hydrolizable residue, q is a whole number with a value $\geq 2$, r has the value zero or is a whole number with a value $\geq 1$, where the sum (q + r) has a value sufficient for charge compensation with E.

**5.** Use according to any of claims 1 to 4, characterized in that the metal compound (1) and the bi-functional compound (2) have been used at least in a molar ratio which is sufficient for the coordinate saturation of the metal M, preferably in a molar ratio (1):(2) of 1:1 to 1:20 or more.

**6.** Use according to any of claims 1 to 5, characterized in that the bi-functional compound (2) and the network former (3) have been used in a molar ratio (2):(3) from 1:5 to 1:300 or more.

**7.** Use according to any of claims 1 to 6, characterized in that the reaction in stage a) has either been carried out in one stage or the complex forming reaction has first been carried out in a reaction medium free from water, optionally the resultant metal complex has been isolated, and then the hydrolytic poly-condensation has been carried out according to the sol-gel process.

8. Use according to any of claims 1 to 7, characterized in that the oxidation in step b) has been carried out by wet chemistry with a suitable oxidising agent and/or by calcining the poly-condensate in an atmosphere containing oxygen.

9. Use according to any of claims 1 to 8, characterized in that the reduction in stage c) has been carried out with a liquid or gaseous reducing agent, preferably at temperatures from room temperature up to 500°C.

10. Use according to any of claims 1 to 9, characterized in that an annealing or sintering treatment has then been carried out, in order to increase the particle size of the metal particles.

11. Use according to any of claims 1 to 10, characterized in that the metal particles have a mean particle size of 1 to 300 nm.

12. Use according to claim 11, characterized in that the particle size distribution corresponds approximately to a Gaussian distribution, wherein the minimum diameter and the maximum diameter of a distribution differ by a factor of 2 to 5.

13. Use of the dielectrics according to any of claims 1 to 12 for making electrical apparatuses.

14. Use of the dielectrics according to any of claims 1 to 12 for making low reflection absorbers for HF and microwave radiation.

15. Use of the dielectrics according to any of claims 1 to 12 for making components, especially terminations and sinks for microstrip technology.

16. Use of the dielectrics according to any of claims 1 to 12 for making high power detectors.

**Revendications**

1. Utilisation de matériaux composites contenant des particules de métal d'une taille granulométrique moyenne comprise entre 0,2 nm à 500 nm dispersées dans une matrice isolante d'oxydes et que l'on obtient en ce que

   a) dans un milieu réactionnel liquide (1) un ou plusieurs composés de métal et (2) un ou plusieurs composés bifonctionnels comportant au moins un groupe susceptible de complexer le métal et au moins un groupe formant une structure réticulée minérale lors de la polycondensation, ainsi que le cas échéant (3) un ou plusieurs agents réticulants capables de polycondensation, où les composés (1), (2) et (3) sont solubles dans le milieu réactionnel, sont soumis aux conditions d'une réaction de complexation et de polycondensation hydrolytique selon le procédé sol-gel,
   b) le polycondensat obtenu est oxydé en vue de l'obtention d'un matériau composite contenant des petites particules de métal et/ou d'oxyde de métal dans une matrice d'oxydes et, le cas échéant
   c) les particules d'oxyde de métal sont réduit en métal, comme diélectriques.

2. Utilisation selon la revendication 1,
caractérisée en ce qu'
on a mis en oeuvre un composé de métal soluble dans le milieu réactionnel selon la formule générale I :

$$M_iX_mY_n \qquad (I)$$

dans laquelle M représente un atome de métal neutre ou chargé positivement, X est un anion, Y est un ligand neutre, i est un nombre entier de valeur ≥ 1, m et n ont la valeur 0 ou sont des nombres entiers ≥ 1, où (m + n) a une valeur suffisante pour la compensation des charges et pour la saturation coordinative de $M_i$.

3. Utilisation selon la revendication 1 ou 2,
caractérisée en ce qui
on a mis en oeuvre un composé bifonctionnel soluble dans le milieu réactionnel selon la formule générale II :

$$A_gz[ER_oR'_p]_h \quad (II)$$

dans laquelle A représente un groupe susceptible de complexer le métal du composé de métal (1), z est un groupe de pontage résistant à l'hydrolyse et -$[ER_oR'_p]$ est un groupe formant une structure réticulée minérale, g, h et o sont des nombres entiers d'une valeur > 0, p est égal à 0 ou à un nombre entier d'une valeur ≥ 1, où (o+p) a une valeur suffisante pour l'équilibrage des charges de E.

**4.** Utilisation selon une des revendications 1 à 3,
caractérisée en ce qu'
on a mis en oeuvre un agent réticulant soluble dans le milieu réactionnel selon la formule générale

$$ER_qR'r \quad (III)$$

dans laquelle E est un élément formant des structures réticulées minérales, lequel est choisi de préférence parmi le groupe du silicium, aluminium, titane, zirconium, étain, germanium, bore, phosphore et arsenic, R est un radical hydrolysable et R' est un radical non hydrolysable, q est un nombre entier d'une valeur ≥ 2, r est égal à 0 ou à un nombre entier ≥ 1, où la somme (q + r) a une valeur suffisante pour l'équilibre des charges de E.

**5.** Utilisation selon une des revendications 1 à 4,
caractérisée en ce qu'
on a mis en oeuvre le composé de métal (1) et le composé bifonctionnel (2) au moins en un rapport molaire suffisant pour la saturation coordinative du métal M, de préférence en un rapport molaire (1) : (2) de 1:1 à 1:20 ou au-delà.

**6.** Utilisation selon une des revendications 1 à 5,
caractérisée en ce qu'
on a mis en oeuvre le composé bifonctionnel (2) et l'agent réticulant (3) en un rapport molaire (2) : (3) de 1:5 à 1:300 ou au-delà.

**7.** Utilisation selon une des revendications 1 à 6,
caractérisée en ce qu'
on a réalisé la réaction de l'étape a) soit en une étape, soit en ce que l'on effectue d'abord la réaction de complexation dans un milieu réactionnel anhydre, que l'on isole le cas échéant le complexe de métal formé, et que l'on réalise ensuite la polycondensation hydrolytique selon le procédé sol-gel.

**8.** Utilisation selon une des revendications 1 à 7,
caractérisée en ce qu'
on a réalisé l'oxydation de l'étape b) par voie humide à l'aide d'un agent d'oxydation approprié et/ou par calcination du polycondensat dans une atmosphère contenant de l'oxygène.

**9.** Utilisation selon une des revendications 1 à 8,
caractérisée en ce qu'
on a réalisé la réduction de l'étape c) à l'aide d'un agent de réduction liquide ou gazeux, de préférence à des températures comprises entre l'ambiante et 500°C.

**10.** Utilisation selon une des revendications 1 à 9,
caractérisée en ce qu'
on a réalisé ensuite un traitement de recuit ou de frittage afin d'augmenter la taille granulométrique des particules de métal.

**11.** Utilisation selon une des revendications 1 à 10,
caractérisée en ce que
les particules de métal présentent une taille granulomÈtrique moyenne comprise entre 1 et 300 nm.

**12.** Utilisation selon une des revendications 1 à 11,
caractérisée en ce que
la distribution granulométrique correspond approximativement à une distribution de Gauss, où le diamètre minimal et le diamètre maximal diffèrent d'un facteur 2 à 5.

**13.** Utilisation des diélectriques selon une des revendications 1 à 12 pour la fabrication d'appareils électriques.

**14.** Utilisation des diélectriques selon une des revendications 1 à 12 pour la fabrication d'absorbeurs à faible réflexion pour les radiations HF et micro-ondes.

**15.** Utilisation des diélectriques selon une des revendications 1 à 12 pour la fabrication d'éléments de construction, en particulier pour des bordures et fonds pour la technologie des guides d'ondes à ruban.

**16.** Utilisation des diélectriques selon une des revendications 1 à 12 pour la fabrication de détecteurs à haute performance.

Fig. 1

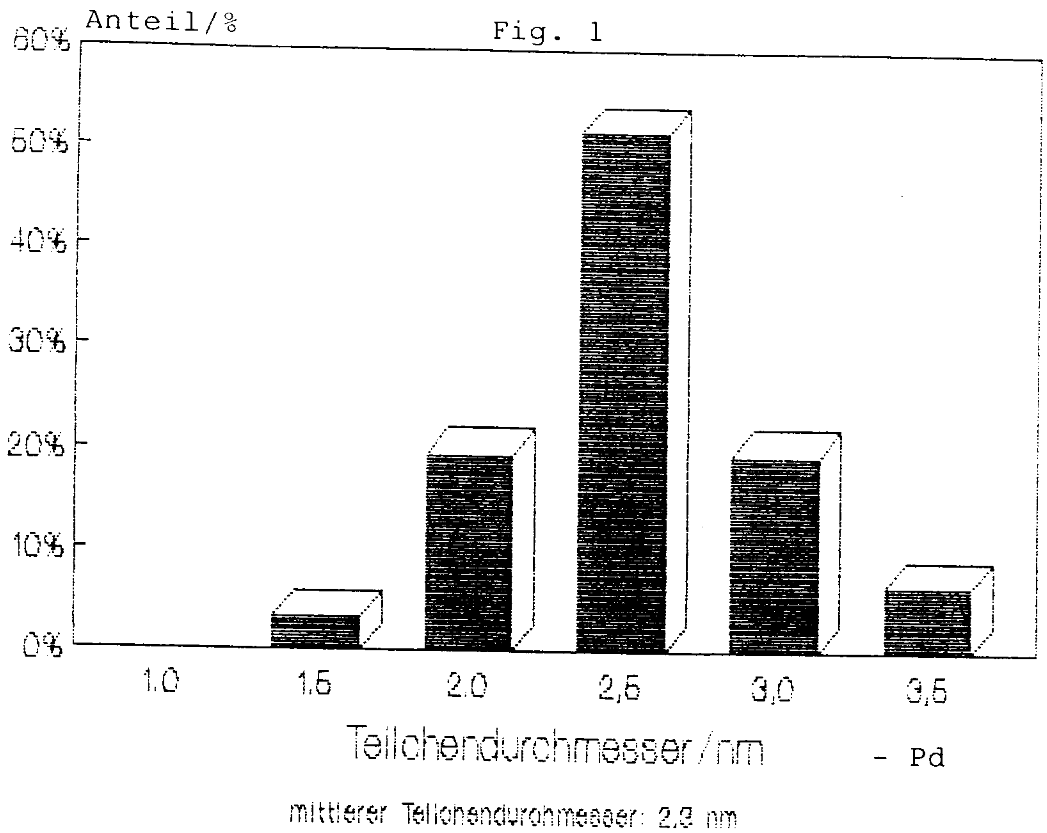
Anteil/%
60%
50%
40%
30%
20%
10%
0%
1,0
1,5
2,0
2,5
3,0
3,5
Teilchendurchmesser/nm
- Pd
mittlerer Teilchendurchmesser: 2,3 nm

Fig. 2

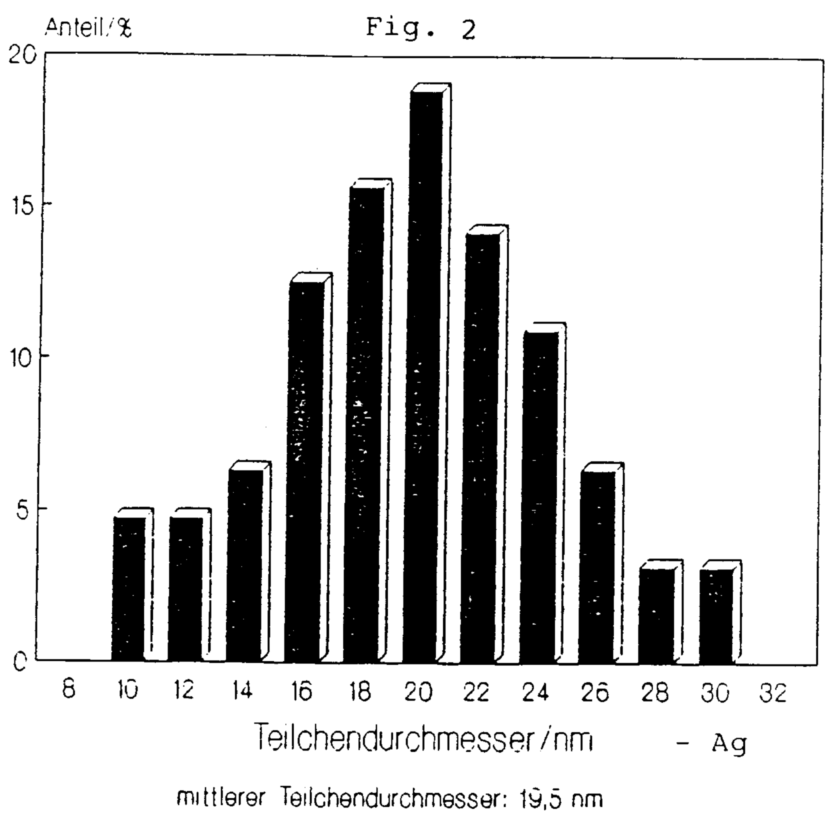
Anteil/%
20
15
10
5
0
8
10
12
14
16
18
20
22
24
26
28
30
32
Teilchendurchmesser/nm
- Ag
mittlerer Teilchendurchmesser: 19,5 nm

Fig. 3

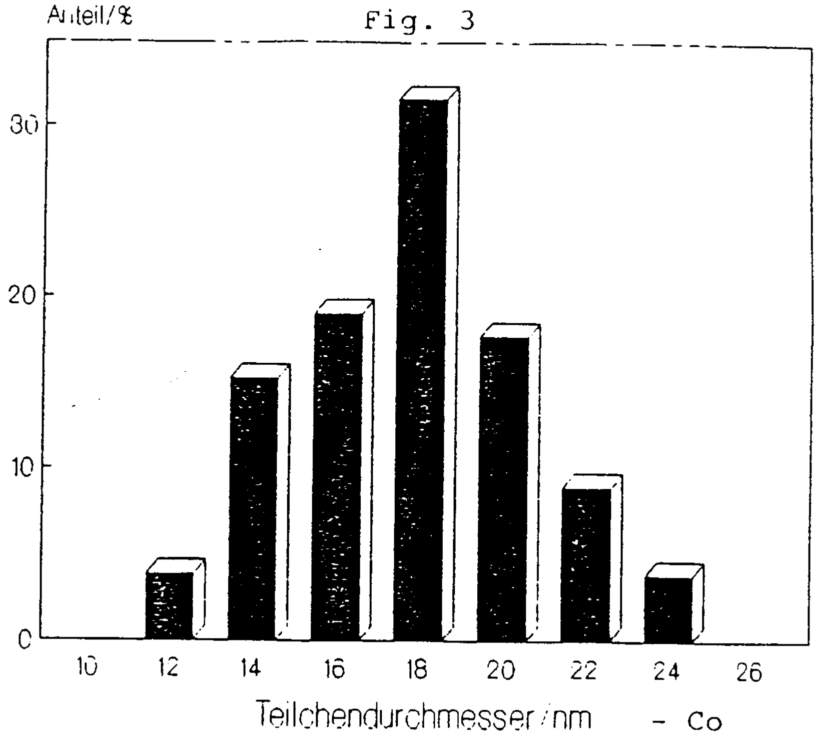


mittlerer Teilchendurchmesser: 17,4 nm

Fig. 4

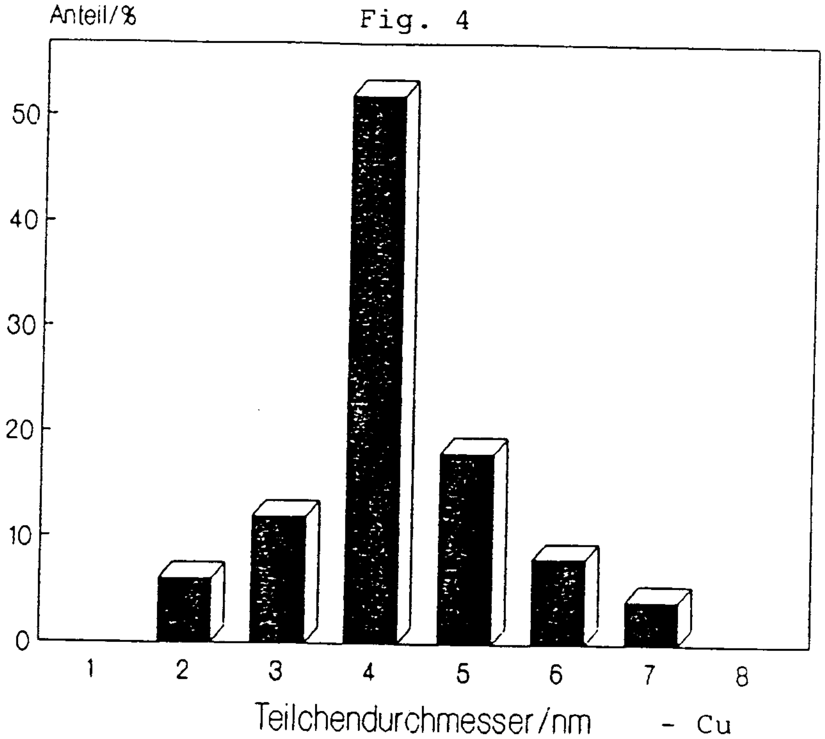


mittlerer Teilchendurchmesser: 3,9 nm

Fig. 5

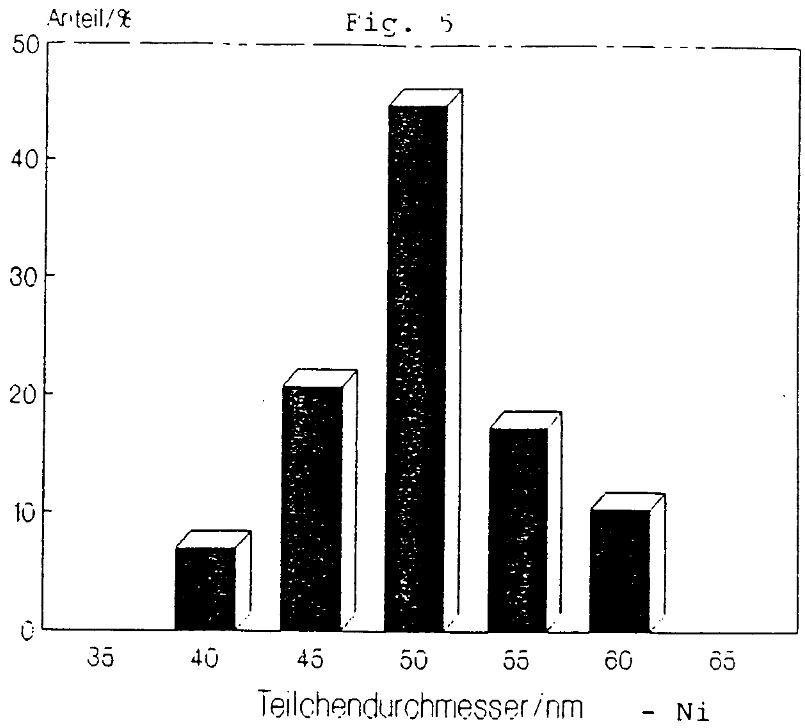


mittlerer Teilchendurchmesser: 50,3 nm

Fig. 6

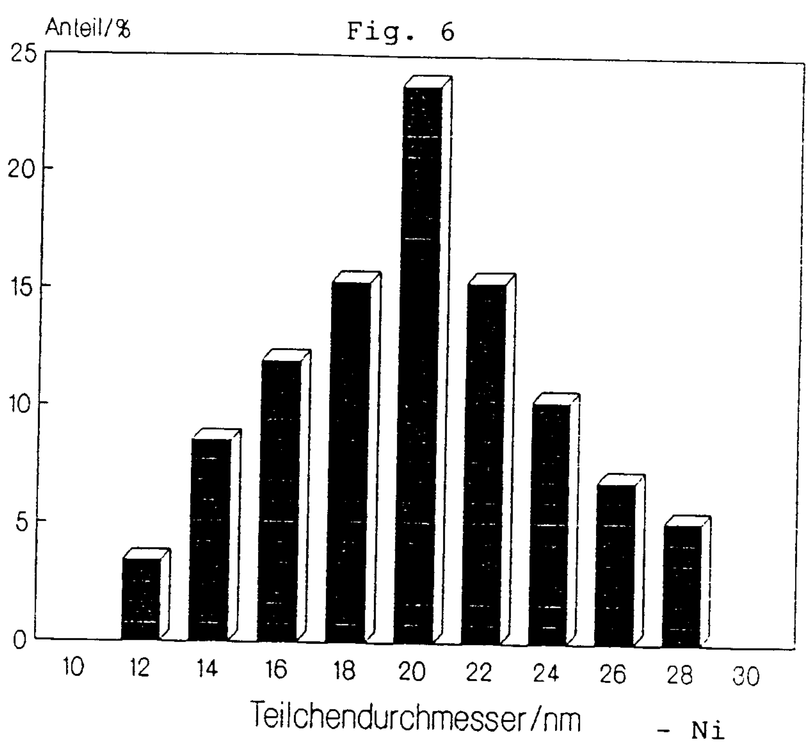


mittlerer Teilchendurchmesser: 19,5 nm

Fig. 7

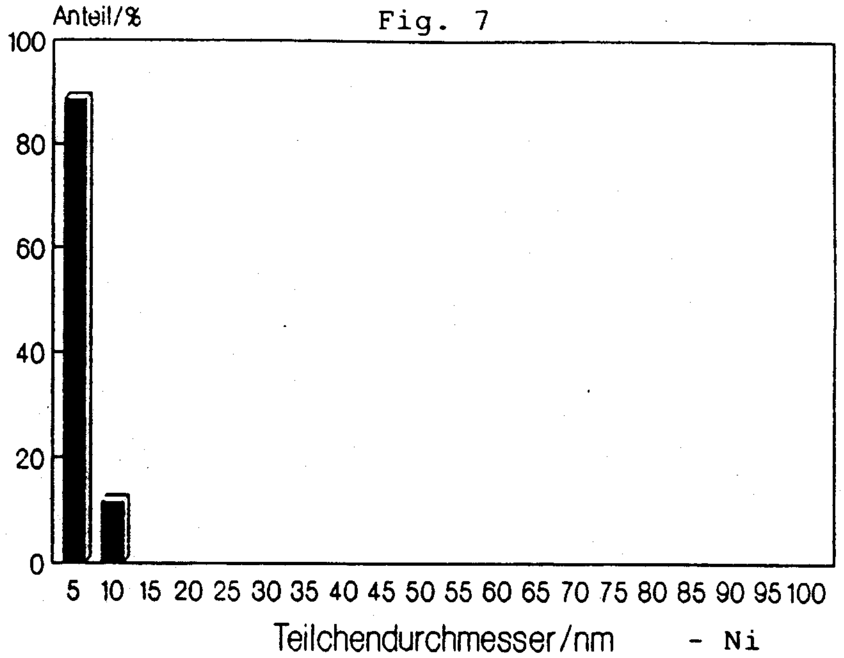


- Ni

mittlerer Teilchendurchmesser: 5,9 nm

Fig. 8

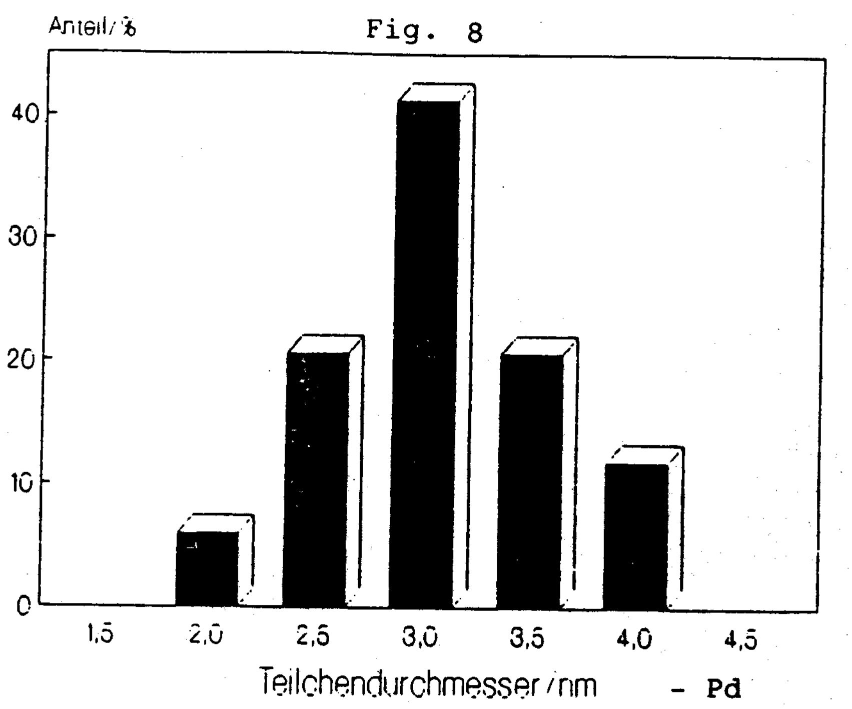


- Pd

mittlerer Teilchendurchmesser: 3,0 nm

Fig. 9

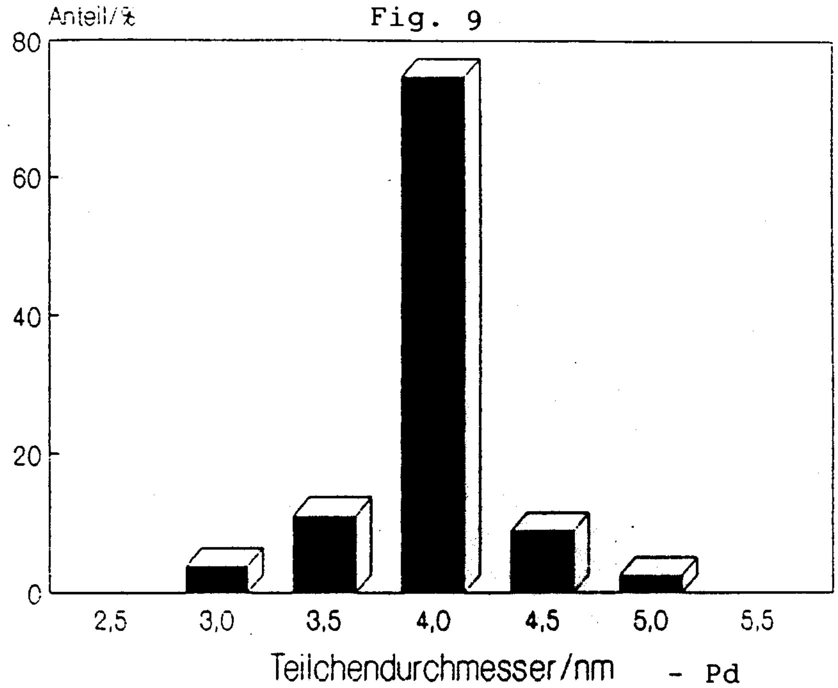


mittlerer Teilchendurchmesser: 3,8 nm

Fig. 10

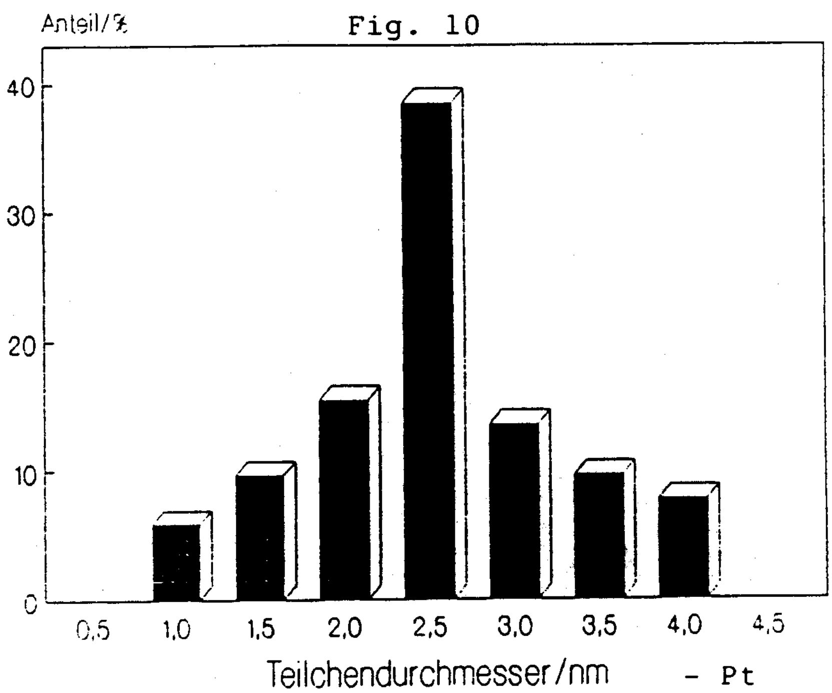


mittlerer Teilchendurchmesser: 2,5 nm